(19) Europäisches Patentamt
European Patent Office
Office européen des brevets

(11) EP 1 930 350 A1

(12) EUROPEAN PATENT APPLICATION
published in accordance with Art. 153(4) EPC

(43) Date of publication:
11.06.2008 Bulletin 2008/24

(21) Application number: 06798257.9

(22) Date of filing: 22.09.2006

(51) Int Cl.:
*C08F 210/02* (2006.01)

(86) International application number:
PCT/JP2006/318869

(87) International publication number:
WO 2007/034920 (29.03.2007 Gazette 2007/13)

(84) Designated Contracting States:
BE DE ES GB NL

(30) Priority: 22.09.2005 JP 2005276761

(71) Applicants:
- Mitsui Chemicals, Inc.
Tokyo 105-7117 (JP)
- Prime Polymer Co., Ltd.
Tokyo 105-7117 (JP)

(72) Inventors:
- SATOH, Yasuo
Chiba 2990265 (JP)
- TOHI, Yasushi
Chiba 2990265 (JP)
- SUGIMURA, Kenji
Yamaguchi 7400061 (JP)
- AKASHI, Takahiro
Chiba 2990108 (JP)
- ENDO, Koji
Chiba 2990265 (JP)

(74) Representative: Cresswell, Thomas Anthony
J.A. KEMP & CO.
14 South Square
Gray's Inn
London WC1R 5JJ (GB)

# (54) ETHYLENE POLYMER, THERMOPLASTIC RESIN COMPOSITION COMPRISING THE POLYMER, AND MOLDED ARTICLE

(57) Provided is an ethylene polymer of the present invention, which is a copolymer of ethylene and an α-olefin having 4 to 10 carbon atoms, and satisfies the following conditions [1] to [4] simultaneously:
[1] an MFR is in the range of 0.10 to 100 g/10 min,
[2] a density (D) is in the range of 860 to 930 kg/m$^3$,
[3] a ratio (Mw/Mn) of the weight average molecular weight to the number average molecular weight is in the range of 1.50 or more and 3.00 or less, and
[4] it satisfies a specific relationship, in accordance with the MFR value of the condition [1], between the ratio (H/W) of the height (H) of a peak having a highest peak intensity to the width (W) at a half of the height of the peak having the highest peak intensity for an elution curve obtained by a temperature rising elution fractionation, and the density (D).

The molded products of the invention including the ethylene polymers of the invention have excellent anti-blocking property and low temperature heat sealing property, as well as excellent mechanical strength and thus are suitably applicable to a film and the like.

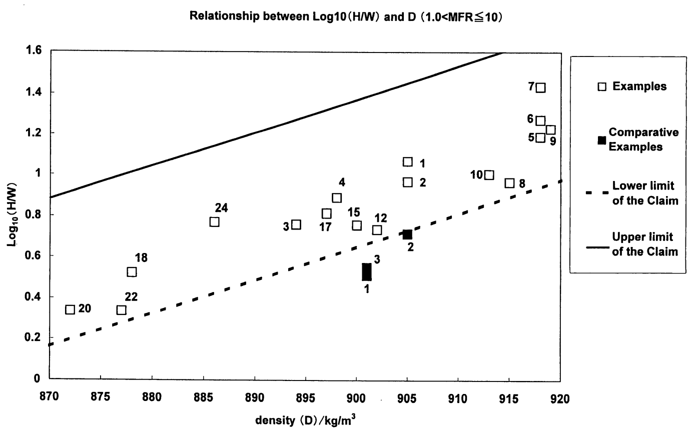




Printed by Jouve, 75001 PARIS (FR)

## Description

Technical Field

The present invention relates to an ethylene polymer, a thermoplastic resin composition comprising the same, and a molded product obtained therefrom. More specifically, the present invention relates to an ethylene polymer having excellent anti-blocking property and low-temperature heat sealing property, as well as excellent mechanical strength, to a thermoplastic resin composition comprising the ethylene polymer, and to a molded product, preferably a film, which is obtained from the ethylene polymer, or the thermoplastic resin composition comprising the ethylene polymer.

Background Art

The ethylene polymer has been provided for a variety of applications as molded by various molding processes. Various ethylene polymers having characteristics in the molding property or the performance of a molded article have been developed.

A High pressure Low density polyethylene has high melt-tension, and good molding property, and thus has found its applications in a film, a hollow container, or the like. However, since the High pressure Low density polyethylene has long-chained branches, it has a problem that it is deteriorated in mechanical strength such as tensile strength, tear strength, and impact resistance strength.

The ethylene polymer obtained by using a Ziegler catalyst is excellent in mechanical strength such as tensile strength, tear strength and impact resistance strength, as compared with a High pressure Low-density polyethylene. However, since it has a wide composition distribution, a molded product such as a film is sticky, and thus its anti-blocking property or the like is deteriorated. When the density of the ethylene polymer is increased, the anti-blocking property is improved, but there is caused a problem that low-temperature heat sealing property or flexibility is deteriorated.

As such, in order to overcome the problems, there is disclosed an ethylene polymer obtained by using a metallocene catalyst which is a homogenous catalyst (single-site catalyst).

Patent Document 1 (Japanese Patent No. 2005-97481A) discloses an ethylene polymer obtained by vapor phase polymerization in the presence of a catalyst comprising a racemic ethylene bis(1-indenyl)zirconium diphenoxide; Patent Document 2 (Japanese Patent No. H09-111208A) discloses an ethylene polymer obtained by using a metallocene compound as a polymerization catalyst (Exxon Chemical Company, product name: EXACT); Patent Document 3 (Japanese Patent No. H11-269324A) discloses an ethylene polymer obtained by high pressure ionic polymerization in the presence of a catalyst comprising ethylene-bis(4,5,6,7-tetrahydroindenyl)zirconium dichloride and methylalumoxane; and Patent Document 4 (Japanese Patent No. 2002-3661A) discloses an ethylene polymer obtained by using a catalyst comprising bis(n-butylcyclopentadienyl)zirconium dichloride and methylalumoxane. Such the ethylene polymers have increasingly narrower composition distribution, as compared with the conventional ethylene polymers obtained by using Ziegler catalysts, but their composition distributions are still wide, and thus they are expectedly deteriorated in the anti-blocking property.

The present inventors have investigated in view of the above-described problems, and as a result, they have found that an ethylene polymer, which satisfies a specific MFR range, a specific density range, a specific range of molecular weight distribution, and a specific relationship between the H/W defined by a temperature rising elution fractionation (TREF) and the density, preferably a specific relationship between the [η] and the MFR, is excellent in the anti-blocking property, and the low-temperature heat sealing property, and also provides a molded product excellent in the mechanical strength, thus leading to completion of the present invention.

[Patent Document 1] Japanese Patent No. 2005-97481A
[Patent Document 2] Japanese Patent No. H09-111208A
[Patent Document 3] Japanese Patent No. H11-269324A
[Patent Document 4] Japanese Patent No. 2002-3661A

Disclosure of the Invention

Problem to be solved by the Invention

It is an object of the present invention to provide an ethylene polymer having excellent anti-blocking property and low-temperature heat sealing property, as well as excellent mechanical strength, a thermoplastic resin composition comprising the ethylene polymer, and a molded product, preferably a film, which is obtained from the ethylene polymer or the thermoplastic resin composition, as compared with per se known ethylene polymers.

Means for solving the Problem

The ethylene polymer of the present invention is characterized in that it is a copolymer of ethylene and an α-olefin having 4 to 10 carbon atoms, and satisfies the following conditions [1] to [4] simultaneously:

[1] a melt flow rate (MFR) at 190˚C under a load of 2.16 kg is in the range of 0.10 to 100 g/10 min,
[2] a density (D) is in the range of 860 to 930 kg/m$^3$,
[3] a ratio (Mw/Mn) of the weight average molecular weight to the number average molecular weight, as determined by GPC, is in the range of 1.50 or more and 3.00 or less, and
[4] it satisfies the following relationships in (Eq-1) to (Eq-3) in accordance with the MFR value of the condition [1] between the ratio (H/W) of the height (H) of a peak having a highest peak intensity to the width (W) at a half of the height of the peak having the highest peak intensity for an elution curve obtained by a temperature rising elution fractionation (TREF), and the density (D):
[for 0.10 ≤ MFR ≤ 1.00]

$$0.0163 \times D - 14.00 \leq \mathrm{Log}_{10}(H/W) \leq 0.0163 \times D - 13.21 \quad \ldots \text{(Eq-1)};$$

[for 1.00 < MFR ≤ 10.0]

$$0.0163 \times D - 14.02 \leq \mathrm{Log}_{10}(H/W) \leq 0.0163 \times D - 13.30 \quad \ldots \text{(Eq-2); and}$$

[for 10.0 < MFR ≤ 100]

$$0.0163 \times D - 14.10 \leq \mathrm{Log}_{10}(H/W) \leq 0.0163 \times D - 13.40 \quad \ldots \text{(Eq-3)}.$$

The ethylene polymer of the present invention preferably further satisfies the following condition [5]:
[5] it satisfies the following relationship (Eq-4) between the intrinsic viscosity [η] (dl/g) as measured in decalin at 135˚C, and the melt flow rate (MFR) at 190˚C under a load of 2.16 kg:

$$-0.21 \times \mathrm{Log}_{10}\mathrm{MFR} + 0.16 \leq \mathrm{Log}_{10}[\eta] \leq -0.21 \times \mathrm{Log}_{10}\mathrm{MFR} + 0.31 \quad \ldots \text{(Eq-4)}.$$

The thermoplastic resin composition of the present invention is characterized in that it comprises the ethylene polymer.
The molded product of the present invention is characterized in that it is obtained from the ethylene polymer of the present invention.
Further, the molded product of the present invention is characterized in that it is obtained from the thermoplastic resin composition of the present invention. The molded product of the present invention is preferably a film.

Effect of the Invention

The present invention provides an ethylene polymer and a thermoplastic resin composition comprising the ethylene polymer having excellent anti-blocking property and low-temperature heat sealing property, as well as excellent mechanical strength, which is used for the preparation of a molded product such as a film. Further, the present invention provides a molded product, preferably a film, having excellent anti-blocking property and low-temperature heat sealing property, as well as excellent mechanical strength.

Brief Description of the Drawings

[Fig. 1] Fig. 1 is a plot graph of the density (D) and the ratio (H/W) obtained from a TREF peak, of ethylene polymers satisfying the MFR value of greater than 1.00 and 10.0 or less among the ethylene polymers disclosed in all Examples and Comparative Examples. In the figure, white squares represent Examples and black squares represent Comparative Examples. In addition, numbers shown in the figure are Example numbers or Comparative Example numbers.

Best Mode for Carrying out the Invention

Hereinbelow, the present invention will be described in detail.

<Ethylene polymer>

The ethylene polymer according to the present invention is a copolymer of ethylene and an α-olefin having 4 to 10 carbon atoms, preferably ethylene and an α-olefin having 6 to 10 carbon atoms, more preferably ethylene and 4-methyl-1-pentene or an α-olefin having 8 carbon atoms, and further more preferably ethylene and an α-olefin having 8 carbon atoms. Examples of the α-olefin having 4 to 10 carbon atoms which is used for copolymerization with ethylene include 1-butene, 1-hexene, 4-methyl-1-pentene, 1-octene, and 1-decene. If the α-olefin has 4 or more carbon atoms, the probability that the α-olefin is included in the crystal is lowered (Polymer, Vol. 31, p. 1999 (1990)), and thus the mechanical strength is excellent. If the α-olefin has 10 or less carbon atoms, the activation energy of the flow is small, and change in viscosity during molding is small.

The kind of the α-olefin in the ethylene polymer can be determined by measurement of the $^{13}$C-NMR spectrum of a sample in which about 200 mg of an ethylene polymer is homogeneously dissolved in 1 ml of hexachlorobutadiene in a usually 10-mmp sample tube under the conditions of a measurement temperature of 120°C, a measurement frequency of 25.05 MHz, a spectrum width of 1500 Hz, a pulse-repetition time of 4.2 sec, 45° pulse width of 6 μsec.

The ethylene polymer has the characteristics represented by the following [1] to [4].

[1] The melt flow rate (MFR) at 190°C under a load of 2.16 kg is in the range of 0.10 to 100 g/10 min, preferably 0.50 to 30.0 g/10 min, more preferably 1.00 to 20.0 g/10 min, and particularly preferably 7.00 to 20.0 g/10 min.

When the melt flow rate (MFR) of the ethylene polymer is 0.10 g/10 min or more, the shear viscosity is not too high, and the molding property is good. When the melt flow rate (MFR) is 100 g/10 min or less, the obtained ethylene polymer has good tensile strength.

Since the melt flow rate (MFR) is strongly dependent on the molecular weight, as melt flow rate (MFR) is less, the molecular weight is higher, and as the melt flow rate (MFR) is higher, the molecular weight is less. Further, the molecular weight of the ethylene polymer is known to be determined by the composition ratio of hydrogen to ethylene (hydrogen/ethylene) in a polymerization system (for example, Kazuo Soga, KODANSHA "CATALYTIC OLEFIN POLYMERIZATION," p. 376 (1990)). For this reason, by increasing or decreasing the ratio of hydrogen/ethylene, an ethylene polymer having a melt flow rate (MFR) in the range from an upper limit to a lower limit as the condition [1] of the present invention can be prepared.

For the present invention, the melt flow rate (MFR) is a value as measured in accordance with ASTM D1238-89 at 190°C under a load of 2.16 kg.

[2] The density (D) is in the range of 860 to 930 kg/m$^3$, preferably 870 to 915 kg/m$^3$, more preferably 875 to 910 kg/m$^3$, particularly preferably 875 to 900 kg/m$^3$, and further more preferably 880 to 895 kg/m$^3$.

When the density (D) is 860 kg/m$^3$ or more, the obtained ethylene polymer has good anti-blocking property, and when the density (D) is 930 kg/m$^3$ or less, the obtained ethylene polymer has good low-temperature sealing property.

Since the density is dependent on the content of α-olefin of the ethylene polymer, as the content of the α-olefin is less, the density is higher, while as the content of the α-olefin is higher, the density is less. Further, the content of the α-olefin in the ethylene polymer is known to be determined according to the composition ratio of the α-olefin to ethylene (α-olefin/ethylene) in the polymerization system (for example, Walter Kaminsky, Makromol. Chem., Vol. 193, p. 606 (1992)). For this reason, by increasing or decreasing the ratio of the α-olefin/ethylene, an ethylene polymer having a

density in the range from an upper limit to a lower limit as the condition [2] of the present invention can be prepared.

The density (D) can be determined by the measurement with a density gradient column using a press sheet having the thickness of 0.5 mm as a measurement sample. The press sheet is obtained by the press molding under the conditions of the preheating temperature of 190 °C, preheating period of 5 minutes, heating temperature of 190°C, heating period of 2 minutes, heating pressure of 100 kg/cm$^2$, cooling temperature of 20°C, coolng period of 5 minutes, and cooling pressure of 100 kg/cm$^2$ with the use of a press molding machine manufactured by Shinto Metal Industries, LTD.

[3] The ratio (Mw/Mn) of the weight average molecular weight to the number average molecular weight, as determined by GPC is in the range of 1.50 or more and 3.00 or less, preferably 1.50 or more and 2.50 or less, more preferably 1.50 or more and 2.20 or less, and particularly preferably 1.60 or more and 2.10 or less.

When the Mw/Mn is 1.50 or more, the obtained ethylene polymer has good molding property, and when the Mw/Mn is 3.00 or less, the obtained ethylene polymer has good impact strength.

For the present invention, the ratio of the weight average molecular weight to the number average molecular weight (Mw/Mn) was measured using a GPC-150C manufactured by Waters Corporation in the following manner. The separation columns were TSKgel GMH6-HT and TSKgel GMH6-HTL, and each column size was such that the inner diameter was 7.5 mm, and the length was 600 mm. The column temperature was 140°C, and the mobile phase was o-dichlorobenzene (manufactured by Wako Pure Chemical Industries, Ltd.) containing 0.025% by weight of BHT (manufactured by Takeda Chemical Industries, Ltd.) as an antioxidant, flowing at a rate of 1.0 ml/min. The sample concentration was 0.1% by weight, and the amount of sample injected was 500 μl. The detector used was a differential refractometer. The standard polystyrenes used were a product manufactured by Tosoh Corp. for the molecular weight of $Mw \leq 1000$ and $Mw \geq 4 \times 10^6$, and a product manufactured by Pressure Chemical Co. for the molecular weight of $1000 \leq Mw \leq 4 \times 10^6$. The molecular weight is calculated in terms of polyethylene as a value using Universal Calibration.

[4] The ratio (H/W) of the height (H) of a peak having a highest peak intensity to the width (W) at a half of the height of the peak having the highest peak intensity for an elution curve obtained by a temperature rising elution fractionation (TREF), and the density (D) satisfies the following relationships in (Eq-1) to (Eq-3). Herein, the MFR is a melt flow rate of the ethylene polymer at 190°C under a load of 2.16 kg.

[For $0.10 \leq MFR \leq 1.00$]

$$0.0163 \times D - 14.00 \leq \mathrm{Log}_{10}(H/W) \leq 0.0163 \times D - 13.21 \quad \ldots(\text{Eq-1});$$

[for $1.00 < MFR \leq 10.0$]

$$0.0163 \times D - 14.02 \leq \mathrm{Log}_{10}(H/W) \leq 0.0163 \times D - 13.30 \quad \ldots(\text{Eq-2}); \text{ and}$$

[for $10.0 < MFR \leq 100$]

$$0.0163 \times D - 14.10 \leq \mathrm{Log}_{10}(H/W) \leq 0.0163 \times D - 13.40 \quad \ldots(\text{Eq-3}).$$

Preferably, the ratio (H/W) and the density (D) satisfies the following relationships (Eq-1') to (Eq-3').

[For $0.10 \leq MFR \leq 1.00$]

$$0.0163 \times D - 13.83 \leq \text{Log}_{10}(H/W) \leq 0.0163 \times D - 13.21$$

(Eq-1');

[for 1.00 < MFR ≤ 10.0]

$$0.0163 \times D - 13.92 \leq \text{Log}_{10}(H/W) \leq 0.0163 \times D - 13.30$$

(Eq-2'); and

[for 10.0 < MFR ≤ 100]

$$0.0163 \times D - 14.02 \leq \text{Log}_{10}(H/W) \leq 0.0163 \times D - 13.40$$

(Eq-3').

More preferably, the ratio (H/W) and the density (D) satisfies the following relationship (Eq-1") to (Eq-3").
[For 0.10 ≤ MFR ≤ 1.00]

$$0.0163 \times D - 13.78 \leq \text{Log}_{10}(H/W) \leq 0.0163 \times D - 13.31$$

(Eq-1'');

[for 1.00 < MFR ≤ 10.0]

$$0.0163 \times D - 13.87 \leq \text{Log}_{10}(H/W) \leq 0.0163 \times D - 13.40$$

(Eq-2''); and

[for 10.0 < MFR ≤ 100]

$$0.0163 \times D - 13.97 \leq \text{Log}_{10}(H/W) \leq 0.0163 \times D - 13.50$$

(Eq-3'').

And particularly preferably, the ratio (H/W) and the density (D) satisfies the following relationship (Eq-1''') to (Eq-3''').
[For 0.10 ≤ MFR ≤ 1.00]

$$0.0163 \times D - 13.73 \leq \text{Log}_{10}(H/W) \leq 0.0163 \times D - 13.41$$

(Eq-1''');

[for 1.00 < MFR ≤ 10.0]

$$0.0163 \times D - 13.82 \leq \mathrm{Log}_{10}(H/W) \leq 0.0163 \times D - 13.50$$

(Eq-2'''); and

[for 10.0 < MFR ≤ 100]

$$0.0163 \times D - 13.92 \leq \mathrm{Log}_{10}(H/W) \leq 0.0163 \times D - 13.60$$

(Eq-3''').

In the temperature rising elution fractionation (TREF), the components having higher contents of the α-olefin are eluted at lower temperatures, while the components having lower contents of the α-olefin are eluted at higher temperatures. The H/W is represented by the ratio of the height (H) of a peak having a highest peak intensity to the width (W) at a half of the height of the peak having the highest peak intensity for an elution curve obtained by a temperature rising elution fractionation (TREF), and thus as compared with other ethylene polymers having an equal density, an α-olefin is more uniformly introduced to the molecular chain of an ethylene polymer having a higher H/W, and the composition distribution gets narrower. For this reason, when for 0.10 ≤ MFR ≤ 1.00, the $\mathrm{Log}_{10}$(H/W) is 0.0163 × D - 14.00 or more, for 1.00 < MFR ≤ 10.0, the $\mathrm{Log}_{10}$(H/W) is 0.0163 × D - 14.02 or more; for 10.0 ≤ MFR ≤ 100, and the $\mathrm{Log}_{10}$(H/W) is 0.0163 × D - 14.10 or more, the obtained ethylene polymer has narrow composition distribution, the sticky components are not generated, and thus the anti-blocking property is excellent.

It is known that since the H/W is strongly dependent on the composition distribution of the obtained ethylene polymer, as the active site of the catalyst is more homogeneous, the composition distribution is narrower, while as the active site of the catalyst is less homogeneous, the composition distribution is wider. One of the factors governing the homogeneity of the catalyst active site is a molar ratio ([B component]/[A component]) between a compound which is added usually as a cocatalytic compound (B component as described below, and in Example 1, MMAO from Tosoh Finechem Corp.) and a bridged metallocene compound which is added as a main catalyst (A component as described below, and in Example 1, di(p-tolyl)methylene(cyclopentadienyl)(octamethyloctahydrodibenzof luorenyl)zirconium dichloride). By increasing or decreasing the ratio of [B component]/[A component], an ethylene polymer having an H/W in the range from an upper limit to a lower limit as the condition [4] of the present invention can be prepared.

Herein, for the present invention, the H/W was determined as follows.

First, an elution curve obtained by the temperature rising elution fractionation (TREF) is measured by using a cross fraction chromatography device CFCT-150 A Type manufactured by Mitsubishi Kagaku Corp. in the following manner. The measurement sample is dissolved in a solvent (o-dichlorobenzene) at a concentration of 4 mg/ml at 140˚C, and then poured into a sample loop in the measurement device. 0.4 ml of the sample solution is added to a TREF separation column (a stainless steel column provided in the device filled with glass beads as inert carriers, capacity: 0.88 ml, and line capacity: 0.07 ml). Then, the sample solution is allowed to be cooled from 140˚C to 0˚C at a rate of 1˚C /min, and coated on the inert carriers. At this time, polymer layers ranging from high crystallizability components to low crystallizability components are generated on the inert carriers. The TREF separation column is maintained at 0˚C for further 30 min, and then 2 ml of the components dissolved at 0˚C is flowed from the TREF separation column to a SEC separation column (Shodex AT-806MS × 3, manufactured by Showa Denko K.K., Japan) at a flow rate of 1 ml/min. During the fractionation in the SEC separation column on a molecular size, in the TREF separation column, the temperature is elevated to the next elution temperature (5˚C), and then maintained at that temperature for about 30 min. The elution temperature is stepwise elevated to the following temperatures.

[Elution temperature]

0, 5, 10, 15, 20, 25, 30, 35, 40, 45, 49, 52, 55, 58, 61, 64, 67, 70, 73, 76, 79, 82, 85, 88, 91, 94, 97, 100, 102, 120, 140˚C.

The molecular weights of the component which had been eluted at each of the temperatures were measured, and the molecular weights in terms of polyethylene were determined using a general-purpose calibration curve. The SEC temperature is 140˚C, and the data sampling time is 0.50 sec. For the sample solution which has passed through an SEC separation column, absorption intensity which is proportional to the concentration of the polymers is measured by using

an infrared spectrophotometer (wavelength 3.42 μm, 2924 $cm^{-1}$) to obtain a chromatogram according to each of the elution temperatures. Using a built-in data processing software, a baseline is drawn of the chromatogram according to each of the elution temperatures, and computer-processed. The areas of chromatogram are each integrated to calculate an integrated elution curve. Further, this integrated elution curve is differentiated with respect to a temperature to calculate a differentiated elution curve.

Next, construction of the obtained differentiated elution curve was carried out, which has an axis of abscissas representing an elution temperature with 89.3 mm per 100°C, and an axis of ordinates representing a differential amount (a differential amount of the variation of 1°C when the whole integrated eluted amount is normalized to 1.0,) with 76.5 mm per 0.1, and H/W was defined as a value obtained by dividing the height (mm) of a peak of the differentiated elution curve with the width (mm) at a half of the height of the peak.

The ethylene copolymer according to the present invention preferably further satisfies the condition [5], in addition to the above-described conditions [1] to [4].

[5] The intrinsic viscosity [η] (dl/g) as measured at 135°C in a decalin solvent, and the melt flow rate (MFR) as measured at 190°C under a load of 2.16 kg satisfy the following relationship (Eq-4):

$$-0.21 \times Log_{10}MFR + 0.16 \le Log_{10}[\eta] \le -0.21 \times Log_{10}MFR + 0.31 \quad (Eq\text{-}4).$$

It is known that the relationship between the intrinsic viscosity ([η]) and the melt flow rate (MFR) is strongly dependent on the structure of long-chained branches in the molecular chain (for example, Kenzo Shiroyama, Polymer Chemistry, Vol. 28, No. 310, pp. 156 to 160 (1971)). As compared with other ethylene polymers having equal melt flow rates (MFR), the introduction of long-chained branches decreases the extension of the molecular chain in the solution, and the intrinsic viscosity ([η]) is decreases. When the $Log_{10}[\eta]$ is ($-0.21 \times Log_{10}MFR + 0.26$) or more, any long-chained branch is not present in the molecular chain, and thus the tear strength is excellent.

For the condition [5], there are two preffered aspects of the ethylene polymer according to an expecting characteristic when the ethylene polymer is provided for the applications of molded products. That is, in the case of expecting an ethylene polymer having a short-chained branch structure resulted from α-olefin, which is provided in a copolymerization reaction with ethylene, (for example, an ethyl group is introduced as a short-chained branch, when 1-butene is used as α-olefin) as a main branch structure and hardly having a long-chained branch structure produced through a macromer of having a vinyl group at its terminal, the ethylene polymer satisfying the following relationship (Eq-4a) is preferable for the condition [5] (hereinafter, may be referred as a short-chained branch type ethylene polymer).

$$-0.21 \times Log_{10}MFR + 0.26 \le Log_{10}[\eta] \le -0.21 \times Log_{10}MFR + 0.31 \quad (Eq\text{-}4a).$$

On the other hand, in the case of expecting an ethylene polymer having a small content of long-chained branch structures produced through a macromer, the ethylene polymer satisfying the following relationship in (Eq-4b) is preferable for the condition [5] (hereinafter, may be referred as a long-chained branch type ethylene polymer). These long-chained branch type ethylene polymers shows high elasticity upon slow molding in a melting state as compared with the short-chained branch type ethylene polymers, and thus may be applied to the field where a good molding processability is required.

$$-0.21 \times Log_{10}MFR + 0.16 \le Log_{10}[\eta] \le -0.21 \times Log_{10}MFR + 0.26 \quad (Eq\text{-}4b).$$

In the case of coordination polymerization as Examples described below, it is believed that the structure of a long-chained branch in the ethylene polymer is produced by reinserting the molecular chain having a terminal vinyl group

(macromer) produced by the β-hydrogen elimination reaction. For this reason, by increasing or decreasing the ratio ([macromer]/[ethylene]) of the concentration of the macromer in the solution to the concentration of ethylene, the amount of the long-chained branch in the ethylene polymer can be increased or decreased. As a result, an ethylene polymer having an intrinsic viscosity [η] in the range from an upper limit to a lower limit as the condition [5] of the present invention can be prepared. In general, when the ratio of [macromer]/[ethylene] is increased, the amount of the long-chained branches in the ethylene polymer is increased, and when the ratio of [macromer]/[ethylene] is decreased, the amount of the long-chained branch in the ethylene polymer is decreased. Specific examples of the method to increase or decrease the ratio of [macromer]/[ethylene] in the solution are as follows:

[1] Polymerization Temperature
The β-hydrogen elimination reaction more easily occurs as the polymerization temperature is high. Therefore, increasing the polymerization temperature increases the ratio of [macromer]/[ethylene], thereby increasing the amount of the long-chained branch in the ethylene polymer.
[2] Concentration of the Polymer
When the concentration of the polymer in the solution is increased, the concentration of the macromer is relatively increased. Accordingly, the ratio of [macromer]/[ethylene] is increased and thus the amount of the long-chained branch in the ethylene polymer is increased.
[3] Conversion of Ethylene
When the conversion of ethylene is increased, the concentration of ethylene in the solution is decreased. Accordingly, the ratio of [macromer]/[ethylene] is increased and thus the amount of the long-chained branch in the ethylene polymer is increased.
[4] Type of Solvent
When a polymerization solvent having the low boiling point is used, the concentration of ethylene in the solution is decreased. Therefore, the ratio of [macromer]/[ethylene] is increased and thus the amount of the long-chained branch in the ethylene polymer is increased.
In addition to controlling the elimination reaction of β-hydrogen, the amount of the long-chained branch in the ethylene polymer can be changed by increasing or decreasing the ratio of [macromer]/[ethylene] while controlling the chain transfer reaction to A1.

The intrinsic viscosity [[η] (dl/g)] was measured using a decalin solvent in the following manner. About 20 mg of an ethylene polymer was dissolved in 15 ml of decalin, and the specific viscosity, $\eta_{sp}$, was measured in an oil bath at 135˚C. This decalin solution was diluted by adding 5 ml of the decalin solvent, and the specific viscosity, $\eta_{sp}$, was measured in the same manner. This dilution operation was further repeated twice to determine the value of $\eta_{sp}/C$ when the concentration (C) is extrapolated to 0, as the intrinsic viscosity. That is, the intrinsic viscosity [η] is represented as the following formula.

$$[\eta] = \lim(\eta_{sp}/C) \quad (C \rightarrow 0)$$

The ethylene polymer of the present invention can be prepared, for example, by carrying out solution polymerization at 120˚C to 300˚C under the coexistence with solvent (hereinafter, also called as a "high temperature solution polymerization") of ethylene and at least one monomer selected from α-olefins in the presence of a catalyst for olefin polymerization comprising:

(A) a bridged metallocene compound represented by the following formula [I], and
(B) at least one kind of the compound (which may be also referred to as a "cocatalyst") selected from

(b-1) an organoaluminum-oxy compound,
(b-2) a compound which reacts with the metallocene compound (A) to form ion pairs, and
(b-3) an organoaluminum compound.

However, the process for preparing the ethylene polymer according to the present invention is not limited to the above-mentioned process at all, as long as it satisfies the conditions for the ethylene polymer as defined in the accompanied claims. For example, a metallocene compound having a structure other than that of the formula [I] may be used, a cocatalyst other than the (B) component may be used, and at least two kinds of the known ethylene polymers blended in a reactor or blended physically, or the like, may be used as the ethylene polymer of the present invention.

[Chemical Formula 1]

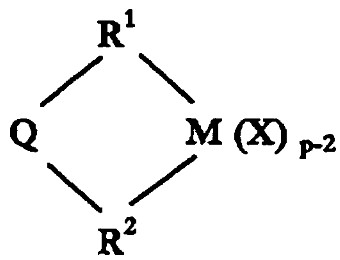

··· [I]

wherein, M represents a transition metal; p represents a valence of the transition metal; X's may be the same or different from each other, and each represent a hydrogen atom, a halogen atom or a hydrocarbon group; $R^1$ and $R^2$ may be the same or different from each other, and each represent a $\pi$ electron-conjugated ligand coordinated to M; and Q represents a divalent group bridging two $\pi$ electron-conjugated ligands.

In the formula [I], examples of the transition metal represented by M include Zr, Ti, Hf, V, Nb, Ta and Cr, and preferably Zr, Ti and Hf, and more preferably Zr and Hf.

In the formula [I], the $\pi$ electron-conjugated ligand represented by $R^1$ and $R^2$ include ligands having a $\eta$-cyclopentadienyl structure, a $\eta$-benzene structure, a $\eta$-cycloheptatrienyl structure, and a $\eta$-cyclooctatetraene structure, and particularly preferably a ligand having a $\eta$-cyclopentadienyl structure. Examples of the ligand having a $\eta$-cyclopentadienyl structure include a cyclopentadienyl group, an indenyl group, a hydrogenated indenyl group, and a fluorenyl group. These groups may be further substituted with a halogen atom, a hydrocarbon group such as, alkyl, aryl, aralkyl, alkoxy, and aryloxy, a hydrocarbon group-containing silyl group such as a trialkyl silyl group, and a linear or cyclic alkylene group, and the like.

In the formula [I], the bridging group of $R^1$ and $R^2$ represented by Q is not particularly limited as long as it is a divalent group, but examples thereof include a linear chained or branch chained alkylene group, an unsubstituted or substituted cycloalkylene group, an alkylidene group, an unsubstituted or substituted cycloalkylidene group, an unsubstituted or substituted a phenylene group, a silylene group, a dialkyl-substituted silylene group, a germyl group, and a dialkyl-substituted germyl group.

For Examples as described below, as the metallocene compound satisfies the formula [I], a metallocene complex represented by di(p-tolyl)methylene(cyclopentadienyl) (octamethyloctahydrodibenzofluorenyl)zirconium dichloride is used. However, the metallocene compound according to the present invention is not limited thereto.

Next, a preferable embodiment for using the metallocene compound (A) as a polymerization catalyst component for preparation of the ethylene polymer of the present invention will be explained.

When the metallocene catalyst comprising metallocene compound (A) is used as a catalyst for olefin polymerization, the polymerization catalyst preferably comprises (A) a metallocene compound represented by the above general formula [I], and (B) at least one kind of the compound selected from (b-1) an organoaluminum-oxy compound, (b-2) a compound which reacts with the metallocene compound (A) to form ion pairs, and (b-3) an organoaluminum compound, as described above. Herein, as the catalyst component (B), from the viewpoint of the polymerization activity and the properties of the resulting olefin polymer, any one of the following [c1] to [c4] is used preferably.

[c1] (b-1) an organoaluminum-oxy compound alone,
[c2] (b-1) an organoaluminum-oxy compound and (b-3) an organoaluminum compound,
[c3] (b-2) a compound which reacts with the metallocene compound (A) to form ion pairs, and (b-3) an organoaluminum compound, and
[c4] (b-1) an organoaluminum-oxy compound and (b-2) a compound which reacts with the metallocene compound (A) to form ion pairs.

Here, the metallocene compound in which Q in the formula [I] is a silylene group is used as the (A) component, as the (B) component, (b-2) the compound which reacts with the metallocene compound (A) to form ion pairs is not used, and thus among the above-described preferable (B) components, i.e., [c1] to [c4], only [c1] and [c2] are employed.

Hereinbelow, each of the components which can constitute the component (B) will be described in detail.

(b-1) Organoaluminum-Oxy Compound

As the organoaluminum-oxy compound (b-1), publicly known aluminoxane can be used as it is. Specifically, such publicly known aluminoxane is represented by the following formula [II] and/or [III]

[Chemical Formula 2]

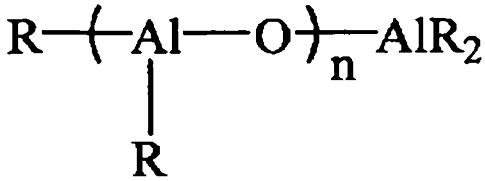

··· [II]

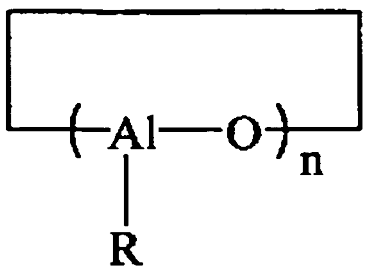

··· [III]

In the formula [II] or [III], R represents a hydrocarbon group having 1 to 10 carbon atoms, and n represents an integer of 2 or more. Among these compounds, the methyl aluminoxane in which R is a methyl group with preferable n of 3 or more, preferable n of 10 or more is preferably used. (The organoaluminum-oxy compound in which R in the formula [II] or [III] is a methyl group may be referred to as methyl aluminoxane hereinafter.)

The methyl aluminoxane is an organoaluminum-oxy compound which has been widely used in the field of polyolefin industry in view of easy availability and high polymerization activity, but it is hardly soluble in saturated hydrocarbons, and thus it has been inevitably used as an aromatic hydrocarbon solution such as toluene and benzene having a high environmental load. Under such circumstances, methylaluminoxane analogues soluble in saturated hydrocarbons have been developed. Examples of the methylaluminoxane analogues include a modified methyl aluminoxane represented by the following formula [IV]. According to the present invention, the organoaluminum-oxy compound (b-1) include such modified methyl aluminoxane.

[Chemical Foemula 3]

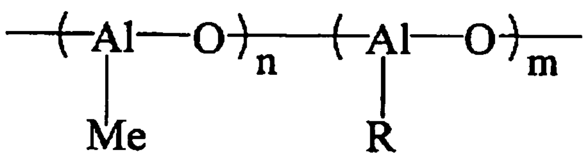

··· [IV]

(In the formula [IV], R represents a hydrocarbon group having 2 to 20 carbon atoms, and m and n represent

integers of 2 or more).
This modified methyl aluminoxane represented by the above formula [IV] is prepared from trimethyl aluminum and alkyl aluminum other than trimethyl aluminum (for example, the preparation process is dislosed in U.S. Patent Nos. 4,960,878, 5,041,584, etc.). Further, the modified methyl aluminoxane in which R is an iso-butyl group, prepared from trimethyl aluminum and tri-isobutyl aluminum, is commercially produced in a trade name of MMAO or TMAO by Tosoh Finechem Corp. etc (see, for example, "Tosoh Fine Research and Technique Report", Vol. 47, 55 (2003)). However, the present Applicant ensures that even if MMAO or TMAO is used in a polymerization in the form of a saturated hydrocarbons solution out of the technical scope of a high temperature solution polymerization process of the present invention, the activity greater than that of methyl aluminoxane can not be achieved. By the high temperature solution polymerization process according to the present invention, a high polymerization activity is exhibited even with the use of a saturated hydrocarbons solution of the modified aluminoxane represented by the above formula [IV].
For the high temperature solution polymerization process according to the present invention, the benzene-insoluble organoaluminum-oxy compounds as described in JP-A No. 2-78687 can be also employed as the organoaluminum-oxy compound (b-1).
Further, the organoaluminum-oxy compound (b-1) used in the present invention include a boron-containing organoaluminum-oxy compound represented by the following formula [V].
[Chemical Formula 4]

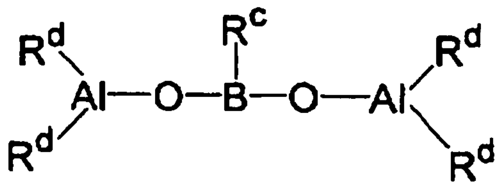
... [V]

(In the formula [V], $R^c$ represents a hydrocarbon group having 1 to 10 carbon atoms, $R^d$'s may be the same or different from each other, and each represent a hydrogen atom, a halogen atom or a hydrocarbon group having 1 to 10 carbon atoms).
The organoaluminum-oxy compound (b-1) may be contaminated with some organoaluminum compounds.

(b-2) Compounds which react with the metallocene compound (A) to form an ion pair

Examples of the compound (b-2) which reacts with the metallocene compound (A) to form an ion pair (referred to as an "ionic compound" hereinafter) may include Lewis acids, ionic compounds, borane compounds and carborane compounds, as described in earlier publication of JP-A Nos. 1-501950, 1-502036, 3-179005, 3-179006, 3-207703 and 3-207704, U.S. Patent No. 5,321,106, etc. The ionic compounds (b-2) also include a heteropoly compound and an isopoly compound.
According to the present invention, the ionic compound (b-2) preferably employed is a compound represented by the following formula [VI].
[Chemical Formula 5]

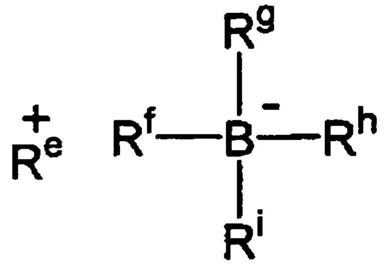

··· [VI]

wherein examples of $R^{e+}$ include $H^+$, a carbenium cation, an oxonium cation, an ammonium cation, a phosphonium cation, a cycloheptyltrienyl cation, and a ferrocenium cation having transition metal. $R^f$ to $R^i$ may be the same or different from each other, and each represents an organic group, preferably an aryl group.

Specific examples of the carbenium cation include 3-substituted carbenium cations such as a triphenyl carbenium cation, a tris(methylphenyl)carbenium cation, and a tris(dimethylphenyl)carbenium cation.

Specific examples of the ammonium cation include a trialkyl ammonium cation such as a trimethyl ammonium cation, a triethyl ammonium cation, a tri(n-propyl)ammonium cation, a tri-isopropyl ammonium cation, a tri(n-butyl) ammonium cation, a tri-isobutyl ammonium cation, a N,N-dialkyl anilinium cation such as an N,N-dimethyl anilinium cation, an N,N-diethyl anilinium cation, an N,N,N-2,4,6-pentamethyl anilinium cation, a dialkyl ammonium cation such as a diisopropyl ammonium cation, and a dicyclohexyl ammonium cation.

Specific examples of the phosphonium cation include a triaryl phosphonium cation such as a triphenylphosphonium cation, a tris(methylphenyl)phosphonium cation, and a tris(dimethylphenyl)phosphonium cation.

Among them, $R^{e+}$ is preferably a carbenium cation, an ammonium cation, or the like, and particularly preferably a triphenylcarbenium cation, an N,N-dimethyl anilinium cation, or an N,N-diethyl anilinium cation.

Specific examples of the ionic compound (b-2) which is a carbenium salt include triphenyl carbenium tetraphenylborate, triphenyl carbenium tetrakis(pentafluorophenyl)borate, triphenyl carbenium tetrakis(3,5-ditrifluoromethylphenyl)borate, tris(4-methylphenyl)carbenium tetrakis(pentafluorophenyl)borate, and tris(3,5-dimethylphenyl)carbenium tetrakis(pentafluorophenyl)borate.

Examples of the ionic compound (b-2) which is an ammonium salt include a trialkyl-substituted ammonium salt, an N,N-dialkyl anilinium salt, and a dialkyl ammonium salt.

Examples of the ionic compound (b-2) which is a trialkyl-substituted ammonium salt include triethyl ammonium tetraphenyl borate, tripropyl ammonium tetraphenyl borate, tri(n-butyl)ammonium tetraphenyl borate, trimethyl ammonium tetrakis(p-tolyl)borate, trimethyl ammonium tetrakis(o-tolyl)borate, tri(n-butyl)ammonium tetrakis(pentafluorophenyl)borate, triethyl ammonium tetrakis(pentafluorophenyl)borate, tripropyl ammonium tetrakis(pentafluorophenyl)borate, tripropyl ammonium tetrakis(2,4-dimethylphenyl)borate, tri(n-butyl)ammonium tetrakis(3,5-dimethylphenyl)borate, tri(n-butyl)ammonium tetrakis(4-trifluoromethylphenyl)borate, tri(n-butyl)ammonium tetrakis(3,5-ditrifluoromethylphenyl)borate, tri(n-butyl)ammonium tetrakis(o-tolyl)borate, dioctadecyl methyl ammonium tetraphenyl borate, dioctadecyl methyl ammonium tetrakis(p-tolyl)borate, dioctadecyl methyl ammonium tetrakis(o-tolyl)borate, dioctadecyl methyl ammonium tetrakis(pentafluorophenyl)borate, dioctadecyl methyl ammonium tetrakis(2,4-dimethylphenyl)borate, dioctadecyl methyl ammonium tetrakis(3,5-dimethylphenyl)borate, dioctadecyl methyl ammonium tetrakis(4-trifluoromethylphenyl)borate, dioctadecyl methyl ammonium tetrakis(3,5-ditrifluoromethylphenyl)borate, and dioctadecyl methyl ammonium.

Examples of the ionic compound (b-2) which a N,N-dialkyl anilinium salt, include N,N-dimethyl anilinium tetraphenyl borate, N,N-dimethyl anilinium tetrakis(pentafluorophenyl)borate, N,N-dimethyl anilinium tetrakis(3,5-ditrifluoromethylphenyl)borate, N,N-diethyl anilinium tetraphenyl borate, N,N-diethyl anilinium tetrakis(pentafluorophenyl)borate, N,N-diethyl anilinium tetrakis(3,5-ditrifluoromethylphenyl)borate, N,N-2,4,6-pentamethyl anilinium tetraphenyl borate, and N,N-2,4,6-pentamethyl anilinium tetrakis(pentafluorophenyl)borate.

Examples of the dialkyl ammonium salt include di(1-propyl)ammonium tetrakis(pentafluorophenyl)borate, and dicyclohexyl ammonium tetraphenyl borate.

Other ionic compounds (b-2) disclosed in JP-A No. 2004-51676 by the present Applicant can be used without any restriction.

These ionic compounds (b-2) can be used alone or in a mixture of two or more kinds.

(b-3) Organoaluminum Compound

Examples of the organoaluminum compound (b-3) which constitutes the catalyst for olefin polymerization include an organoaluminum compound represented by the following formula [VII], and an alkylated complex with a metal element from Group 1 of the periodic table and aluminum, which is represented by the following formula [VIII]:
$$R^a_mAl\ (OR^b)_nH_pX_q \qquad [VII]$$

(wherein $R^a$ and $R^b$ are may be the same or different from each other and each represents a hydrocarbon group having usually 1 to 15 carbon atoms, preferably 1 to 4 carbon atoms, X is a halogen atom, and m, n, p, and q are numbers satisfying the conditions: $0 < m \le 3$, $0 \le n < 3$, $0 \le p < 3$, and $0 \le q < 3$, while $m + n + p + q = 3$).
Specific examples of the organoaluminium compound represented by the formula [VII] include tri-n-alkyl aluminum such as trimethyl aluminum, triethyl aluminum, tri-n-butyl aluminum, trihexyl aluminum, and trioctyl aluminum; tri-branch chained alkyl aluminum such as tri-isopropyl aluminum, tri-isobutyl aluminum, tri-sec-butyl aluminum, tri-tert-butyl aluminum, tri-2-methylbutyl aluminum, tri-3-methyl hexyl aluminum, and tri-2-ethylhexyl aluminum; tri-cycloalkyl aluminum such as tri-cyclohexyl aluminum, and tri-cyclooctyl aluminum; triaryl aluminum such as triphenyl aluminum, and tritolyl aluminum; dialkyl aluminum hydride such as diisopropyl aluminum hydride, and diisobutyl aluminum hydride; alkenyl aluminum, such as isoprenyl aluminum, represented by the formula: $(i\text{-}C_4H_9)_xAl_y(C_5H_{10})_z$ (wherein x, y and z are positive integers, and z is the numbers satisfying the conditions: $z \le 2x$); alkyl aluminum alkoxide such as isobutyl aluminum methoxide, and isobutyl aluminum ethoxide; dialkyl aluminum alkoxide such as dimethyl aluminum methoxide, diethyl aluminum ethoxide, and dibutyl aluminum butoxide; alkyl aluminum sesquialkoxide such as ethyl aluminum sesquiethoxide, and butyl aluminum sesquibutoxide; partially alkoxylated alkyl aluminum having a mean compositions represented by the general formula such as $R^a_{2.5}Al(OR^b)_{0.5}$; alkyl aluminum aryloxide such as diethyl aluminum phenoxide, diethyl aluminum (2,6-di-t-butyl-4-methylphenoxide); dialkyl aluminum halide such as dimethyl aluminum chloride, diethyl aluminum chloride, dibutyl aluminum chloride, diethyl aluminum bromide, and diisobutyl aluminum chloride; alkyl aluminum sesquihalide such as ethyl aluminum sesquichloride, butyl aluminum sesquichloride, and ethyl aluminum sesquibromide; partially halogenated alkyl aluminum of alkyl aluminum dihalide such as ethyl aluminum dichloride; dialkyl aluminum hydride such as diethyl aluminum hydride, and dibutyl aluminum hydride; other partially hydrogenated alkyl aluminum, for example, alkyl aluminum dihydrides such as ethyl aluminum dihydride and propyl aluminum dihydride; and partially alkoxylated and halogenated alkyl aluminums such as ethyl aluminum ethoxychloride, butyl aluminum butoxychloride and ethyl aluminum ethoxybromide.
$$M^2AlR^a_4 \qquad [VIII]$$

(wherein $M^2$ is Li, Na, or K, and $R^a$ is a hydrocarbon group having usually 1 to 15 carbon atoms, preferably 1 to 4 carbon atoms). Specific examples of the compounds represented by the formula [VIII] include $LiAl(C_2H_5)_4$ and $LiAl\ (C_7H_{15})4$.
The compounds similar to the compounds represented by the formula [VII], for example, the organoaluminum compounds in which two or more aluminum compounds are bonded via a nitrogen atom, can be used. A specific example thereof includes $(C_2H_5)_2AlN(C_2H_5)Al\ (C_2H_5)_2$.
From a viewpoint of easy availability, for an organoaluminum compound (b-3), trimethyl aluminum, or tri-isobutyl aluminum is preferably used.
In the polymerization, the method for using each of the components and the sequence of addition are optionally selected. For example, the method in which the catalyst component (A) and the catalyst component (B) are added to a polymerization reactor in any order may be exemplified.
In the polymerization, at least two of each catalyst component may be in contact with each other beforehand.
The component (A) in the preparation of an ethylene polymer using the above-described olefin polymerization catalyst for copolymerization of an ethylene and an $\alpha$-olefin having 4 to 10 carbon atoms is used in the amount in the range of usually $10^{-9}$ to $10^{-1}$ mol/liter, preferably $10^{-8}$ to $10^{-2}$ mol/liter.
The component (b-1) is used in the amount in the range of usually 0.01 to 5,000, preferably 0.05 to 2,000, as a molar ratio of the component (b-1) to all transition metal atoms (M) in the component (A) [(b-1)/M]. The component (b-2) is used in the amount within the range of usually from 10 to 5,000, preferably from 20 to 2,000, as a molar ratio of the aluminum atoms in the components (b-2) to all transition metals (M) in the component of (A) [(b-2)/M]. The component (b-3) is used in the amount within the range of usually from 1 to 10,000, preferably from 1 to 5,000, as a molar ratio of the component (b-3) to the transition metal atoms (M) in the component (A) [(b-3)/M].
In the high temperature solution polymerization according to the present invention, an ethylene polymer having a high content of comonomers, a narrow composition distribution, and a narrow molecular weight distribution can be

efficiently prepared by copolymerization of ethylene and an α-olefin having 4 to 10 carbon atoms in the presence of the above-described metallocene catalyst. Here, the feeding molar ratio of ethylene to the α-olefin having 4 to 10 carbon atoms is as follows: usually ethylene:α-olefin=10:90 to 99.9:0.1, preferably ethylene:α-olefin=30:70 to 99.9:0.1, and more preferably ethylene:α-olefin=50:50 to 99.9:0.1.

Examples of the α-olefin having 4 to 10 carbon atoms include linear or branched α-olefins, for example, propylene, 1-butene, 2-butene, 1-pentene, 3-methyl-1-butene, 1-hexene, 4-methyl-1-pentene, 3-methyl-1-pentene, 1-octene, 1-decene, and 1-dodecene. Examples of the α-olefin which can be used for the high temperature solution polymerization of the present invention include a polar group-containing olefin. Examples of the polar group-containing olefin include α,β-unsaturated carboxylic acids such as acrylic acid, methacrylic acid, fumaric acid, maleic anhydride and metal salts such as a sodium salt thereof; α,β-unsaturated carboxylic acid esters such as methyl acrylate, ethyl acrylate, n-propyl acrylate, methyl methacrylate, ethyl methacrylate; vinyl ester such as vinyl acetate, vinyl propionate; unsaturated glycidyls such as glycidyl acrylate, glycidyl methacrylate; and the like. Also, high temperature solution polymerization may proceed under the coexistence, in the reaction system, of vinyl cyclohexane, diene or polyene; aromatic vinyl compounds, for example, styrene, o-methylstyrene, m-methylstyrene, p-methylstyrene, o,p-dimethyl styrene, methoxy styrene, vinylbenzoate, methyl vinylbenzoate, vinylbenzyl acetate, hydroxystyrene, p-chlorostyrene, divinylbenzene, and the like; and 3-phenylpropylene, 4-phenylpropylene, α-methylstyrene, and the like. Among the above-mentioned α-olefins, 1-butene, 1-hexene, 4-methyl-1-pentene, and 1-octene are preferably used. Further, for the high temperature solution polymerization process according to the present invention, cyclic olefins having 4 to 10 carbon atoms, and preferably 3 to 20 carbon atoms, such as cyclopentene, cycloheptene, norbornene, and 5-methyl-2-norbornene may be used in combination.

The "solution polymerization" according to the present invention generally refers to a method for carrying out polymerization in the state of the polymers dissolved in an inert hydrocarbon solvent at a melting point of the polymer or higher. In the solution polymerization according to the present invention, the polymerization temperature is usually from 120˚C to 300˚C, preferably from 130˚C to 250˚C, and more preferably from 130˚C to 200˚C, and such the solution polymerization is also called as a "high temperature solution polymerization" as described above.

For the high temperature solution polymerization according to the present invention, when the polymerization temperature is not more than 120˚C, the polymerization activity is extremely lowered, thus it is unpractical in view of productivity. Further, in the polymerization temperature of 120˚C or higher, as the temperature is higher, the solution viscosity during the polymerization is lowered, and removal of heat of polymerization is easier. Thus the olefin polymer with a higher molecular weight can be successfully obtained. However, when the polymerization temperature is higher than 300˚C, the obtained polymer may be deteriorated, thus it is undesirable. Further, for the high temperature solution polymerization according to the present invention, in view of the properties of the ethylene polymer which is preferably prepared, the ethylene polymer as described below, which is preferably applied in various industrial field such as a film, can be efficiently produced in the region of the polymerization temperature of 120 to 200˚C. The polymerization pressure is usually from normal pressure to 10 MPa gauge pressure, preferably normal pressure to 8 MPa gauge pressure, and the polymerization reaction may be carried out in any of batch, semi-continuous and continuous processes. Further, polymerization can be carried out at two or more stages which are different in the reaction conditions. The molecular weight of the obtained ethylene polymer can be regulated in the range of the present invention by varying the hydrogen concentration or the polymerization temperature in the polymerization system, as well as the amount of the catalyst component (B) used. When hydrogen is added, the amount is suitably about 0.001 to 5,000 NL per 1 kg of the ethylene polymer produced.

The solvent used in the high temperature solution polymerization according to the present invention is usually an inert hydrocarbon solvent, preferably a saturated hydrocarbon solvent having a boiling point of 50 to 200˚C under normal pressure. Specific examples of the solvent include aliphatic hydrocarbons such as pentane, hexane, heptane, octane, decane, dodecane and kerosene; and alicyclic hydrocarbons such as cyclopentane, cyclohexane and methylcyclopentane. The aromatic hydrocarbons such as benzene, toluene and xylene; and the halogenated hydrocarbons such as ethylene chloride, chlorobenzene and dichloromethane are also included in the inert hydrocarbon solvents used in the high temperature solution polymerization of the present invention, and used without limitation. As described above, for the high temperature solution polymerization according to the present invention, the organoaluminum-oxy compound such as conventionally used aromatic hydrocarbon solution type, as well as a modified methyl aluminoxane such as MMAO which is dissolved in aliphatic hydrocarbon and alicyclic hydrocarbon can be used. As a result, if the aliphatic hydrocarbon or the alicyclic hydrocarbon is used as a solvent for solution polymerization, it is possible to approximately completely eliminate the probability that the ethylene polymer produced in the polymerization system is contaminated with aromatic hydrocarbon. That is, the high temperature solution polymerization method according to the present invention has characteristics of minimizing the impact on the human health, which can reduce the environmental load.

In order to suppress the variation of physical properties, the ethylene polymer particles obtained by the polymerization reaction, and if desire, those added other components are preferably melted in any method, kneaded, assembled, and granulated.

<Thermoplastic resin composition>

By blending the ethylene polymer according to the present invention with other thermoplastic resins, a thermoplastic resin composition having excellent molding property, as well as excellent mechanical strength can be obtained. The blending ratio of the ethylene polymer and other thermoplastic resins is 99.1/0.1 to 0.1/99.9 by weight.

Examples of other thermoplastic resins which constitute the thermoplastic resin composition include crystalline thermoplastic resins such as polyolefin, polyamide, polyester and polyacetal; and non-crystalline thermoplastic resins such as polystyrene, acrylonitrile-butadiene-styrene copolymer (ABS), polycarbonate, polyphenylene oxide and polyacrylate. Further, polyvinyl chloride is also preferably used.

Specific examples of the polyolefin include ethylene polymer, propylene polymer, butene polymer, 4-methyl-1-pentene polymer, 3-methyl-1-butene polymer and hexene polymer. Among them, an ethylene polymer, a propylene polymer and a 4-methyl-1-pentene polymer are preferable. The ethylene polymer used as the polyolefin may be the ethylene polymer of the present invention, the conventional ethylene polymer or the ethylene/polar group-containing vinyl copolymer, preferably the conventional ethylene polymer.

Examples of the polyester may include aromatic polyesters such as polyethylene terephthalate, polyethylene naphthalate and polybutylene terephthalate, and polycaprolacton and polyhydroxybutylate.

Examples of the polyamide may include aliphatic polyamides such as nylon-6, nylon-66, nylon-10, nylon-12, and nylon-46, and an aromatic polyamide prepared by an aromatic dicarboxylic acid and aliphatic diamine.

Examples of the polyacetal may include polyformaldehyde (polyoxymethylene), polyacetaldehyde, polypropionaldehyde and polybutylaldehyde. Particularly, among them, polyformaldehyde is preferable.

The above polystyrene may be either a styrene homopolymer or a binary copolymer of styrene and acrylonitrile, methyl methacrylate or $\alpha$-methylstyrene.

An ABS comprising 20 to 35 mol % of a structural unit derived from acrylonitrile, 20 to 30 mol % of a structural unit derived from butadiene, 40 to 60 mol % of a structural unit derived from styrene is preferably used as the above ABS.

Examples of the above polycarbonate may include polymers obtainable from bis(4-hydroxyphenyl)methane, 1,1-bis(4-hydroxyphenyl)ethane, 2,2-bis(4-hydroxyphenyl)propane or 2,2-bis(4-hydroxyphenyl)butane. Particularly polycarbonate obtainable from 2,2-bis(4-hydroxyphenyl)propane is preferable among them.

As the polyphenylene oxide, poly(2,6-dimethyl-1,4-phenylene oxide) is preferably used.

As the polyacrylate, polymethylmethacrylate and polybutylacrylate are preferably used.

The thermoplastic resins may be used singly or in combination with two or more. Particularly, the preferable thermoplastic resin is polyolefin and more preferable one is the ethylene polymer.

The ethylene polymer according to the present invention may contain, in addition to the above thermoplastic resin, additives such as a weather resistant stabilizer, a heat resistant stabilizer, an antistatic agent, a slipping inhibitor, an anti-blocking agent, an anti-clouding agent, a lubricant, a pigment, a dye, a nucleating agent, a plasticizer, an anti-aging agent, a hydrochloric acid absorbent, and an antioxidant, within the range not deteriorating the purpose of the present invention.

<Molded product>

The ethylene polymer of the present invention, and the thermoplastic resin composition of the present invention comprising the ethylene polymer have excellent molding properties, and thus the processing thereof can provide a molded product, preferably film having excellent mechanical strength.

The ethylene polymer, and the thermoplastic resin composition of the present invention can be molding processed using a per se known method, for example, a common film molding or blow molding, injection molding, injection blow molding, and extrusion molding, and stretching (a uniaxial stretching method, a tubular simultaneous biaxial stretching method, a tenter sequential biaxial stretching method, a tenter simultaneous biaxial stretching method, etc.) in a desired shape.

Examples of the film molding include extrusion laminate molding, T-die film molding, inflation molding (air-cooling, water-cooling, multi-stage cooling, high-speed processing). The obtained film can be used in a single layer, but multi-layer construction is also allowed for providing various functions. In the case of a multi-layer film, a coextrusion method may be exemplified among the above-described molding methods. On the other hand, lamination with a paper and a barrier film (aluminum foil, deposited film, coating film, etc.), in which coextrusion is difficult, is allowed according to the binding lamination molding such as extrusion laminate molding and dry lamination. The production of a multilayered, high-functionality product according to a coextrusion method in the blow molding, injection molding, or extrusion molding is allowed in the similar way as the film molding.

Examples of the molded product obtained by processing the ethylene copolymer, and the thermoplastic resin composition of the present invention include extrusion molded products such as a film, a sheet, a infusion bottle, an electric wire covering, a cross-linked cable, a cross-linked pipe, a hollow container, a tube, various pipes, a pulling cap,

and general merchandise goods, a fiber, large-scale products by spinning molding, and the like.

Examples of the film obtained by processing the ethylene copolymer, and the thermoplastic resin composition comprising the ethylene copolymer of the present invention include a surface protective film, a stretch film, a heat shrinkable film, an automatic packaging film, a beverage packaging paper bag, a liquid soup wrapper, a liquid paper container, a laminated cloth, a specific-shaped liquid product packaging paper bag (a standing pouch, etc.), a regular package, a heavy-duty package, a semi-heavy-duty package, a wrap film, a sugar package, an oily food package, a film for various packaging materials such as food packaging, a infusion bag, and agricultural films such as a house film. Further, according to the present invention, the film combined with a substrate such as nylon and polyester can be used as a multilayer film.

Further, examples of the sheet obtained by processing the ethylene copolymer, and the thermoplastic resin composition comprising the ethylene copolymer of the present invention include a sheet for industrial materials (a water proof sheet, a sheet for public works, etc.), and an foamed sheet.

The ethylene copolymer, and the thermoplastic resin composition comprising the ethylene copolymer of the present invention can be blended with a linear polyethylene (a copolymer of an α-olefin having 5 or less carbon atoms, and ethylene), or a High pressure Low density polyethylene, so as to improve impact strength, low-temperature heat sealing property, hot tackiness, and transparency.

Further, the ethylene copolymer, and the thermoplastic resin composition comprising the ethylene copolymer of the present invention can be blended with polypropylene (any of a homopolymer, a random polymer, and a block polymer), so as to improve impact strength of automotive materials such as a bumper and an instrument panel, or to improve impact strength, low-temperature heat sealing property, hot tackiness, transparency, or cold resistance of a biaxially stretched polypropylene film or a cast molded polypropylene film.

EXAMPLES

The present invention is further described with reference to the following examples, but it should be construed that the invention is in no way limited to those examples.

Hereinbelow, with reference to Examples and Comparative Examples, various physical properties were measured in the following manner.

α-Olefin Content

The α-olefin content was determined by measurement of $^{13}$C-NMR in the above-described method.

Melt Tension (MT)

The melt tension (MT) was determined by measuring a stress given when a molten polymer was stretched at a constant rate. The measurement was carried out using a MT measuring machine manufactured by Toyo Seiki Seisakusho under the conditions of a resin temperature of 190˚C., a melting time of 6 min, a barrel diameter of 9.55 mmϕ, an extrusion speed of 15 mm/min, a take-up rate of 10 to 20 m/min, a nozzle diameter of 2.095 mmϕ and a nozzle length of 8 mm.

Melting Point (Tm)

The melting point (Tm) was measured using a PERKIN ELMER Pyris 1 in the following manner. The measurement sample having a thickness of 2 mm was prepared by press-molding to using a press molding machine manufactured by Shinto Metal Industries, Ltd. under the conditions of pre-heating temperature of 190˚C, a pre-heating time of 5 minutes, a heating temperature of 190˚C, a heating time of 2 minutes, a heating pressure of 100 kg/cm$^2$, a cooling temperature of 20˚C, a cooling time of 5 minutes, a cooling pressure of 100 kg/cm$^2$. About 5 mg of the measurement sample was charged into an aluminum pan to carry out the measurement at the following temperature profiles (1) through (3) under a nitrogen atmosphere (nitrogen: 20 ml/min.).

(1) Temperature elevated from 30˚C to 200˚C at 10˚C/min.

(2) Temperature maintained at 200˚C for 5 minutes and then lowered to 30˚C at 20˚C/min.

(3) Temperature elevated from 30˚C to 200˚C at 10˚C/min.

The temperature at the maximum peak position in the endothermic curve obtained from the above (3) is taken as a melting point (Tm).

Amount of the n-decane-soluble fraction (W)

The amount of the n-decane-soluble components (W) is measured as follows. About 3 g of a copolymer is added to 450 ml of n-decane, and the mixture was heated to 145˚C to dissolve the sample. The solution is cooled to room temperature, the n-decane-insoluble fraction is removed by filtration, and the n-decane-soluble fraction is recovered from the filtrate.

The number average molecular weight (Mn), the weight average molecular weight (Mw), the Z average molecular weight (Mz), the ratio of the Z average molecular weight to the weight average molecular weight (Mz/Mw)

The number average molecular weight (Mn), the weight average molecular weight (Mw), the Z average molecular weight (Mz), and the ratio of the Z average molecular weight to the weight average molecular weight (Mz/Mw) were measured in the above mentioned method using a GPC-150C manufactured by Waters Corporation.

The elution amount (integrated value), Peak temperature

The elution amount (integrated value) and the peak temperature was determined from an elution curve obtained by temperature rising elution fractionation (TREF) which had been measured by using the above-described CFCT-150 A Type as a cross fraction chromatography device manufactured by Mitsubishi Kagaku Corp. The peak temperature is an elution temperature of the peak having the highest peak intensity for the elution curve obtained by the temperature rising elution fractionation (TREF).

[Synthesis of Complex]

Synthesis of di(p-tolyl)methylene($\eta^5$-cyclopentadienyl)($\eta^5$-octamethyloctahydrodibenzofluorenyl)zirconium dichloride

(i) Synthesis of cyclopentadienyl(octamethyloctahydrodibenzofluorenyl)di-p-tolylmethane

Into a 300 ml of two-necked flask equipped with a magnetic stirrer, a 3-way cock, and a dripping funnel, which had been sufficiently purged with nitrogen, 2.98 g (7.71 mmol) of octamethyloctahydrodibenzofluorene and 60 mL of dehydrated tetrahydrofuran were added to obtain a clear solution. While cooling the flask in an iced water bath, 5.2 mL (8.1 mmol) of n-butyllithium/hexane solution (1.56 mol/L) was gradually added to the clear solution in the flask. Next, the solution in the flask was stirred for 7 hours at room temperature under a nitrogen atmosphere to obtain an orange solution. While cooling the flask in a methanol/dry-ice bath, 2.40 g (9.27 mmol) of 6,6-di-p-tolylfulvene melted in 30mL of the dehydrated tetrahydrofuran was gradually added to the solution in the flask through the dripping funnel for 20 minutes. Next, the temperature of the solution was gradually elevated to room temperature and the solution was stirred for 21 hours at room temperature under a nitrogen atmosphere to obtain a dark-red solution. Thereafter, 100 mL of saturated ammonium chloride aqueous solution was added to the solution and then 100 mL of diethylether was added. The resulting double layered solution was transferred to a 300 mL of separating funnel and was shaken down several times to eliminate the clear aqueous layer. Subsequently, the obtained organic layer was washed with 100 mL of water for 2 times and with 100 mL of saturated saline for one time, and then dried over anhydrous magnesium sulfate for 30 minutes. The resulting solid was filtered and the solvent in the solid was distilled away on a rotary evaporator. Thus-obtained solid was washed with hexane to obtain cyclopentadienyl(octamethyloctahydrodibenzofluorenyl)di-p-tolylmethane as a white solid. The yield was 3.55 g (5.50 mmol, the yield constant of 71.3%). The identification of cyclopentadienyl (octamethyloctahydrodibenzofluorenyl)di-p-tolylmethane was carried out using $^1$H-NMR spectra and FD-MS spectra and the results of the measurement are as follows.
In the following NMR-attributed results, OMOHDBFlu is the abbreviation of $\eta^5$-octamethyloctahydrodibenzofluorenyl.
$^1$H-NMR spectrum (270 MHz, $CDCl_3$) :

d/ppm 0.8 to 1.7 (m, Me(OMOHDBFlu), 24H),
d/ppm 2.1 to 2.4 (br, $CH_2$(OMOHDBFlu), 8H),
d/ppm 2.7 to 3.1 (br, $CH_2$(Cp), 1H),
d/ppm 5.2 to 5.4 (m, CH(9-OMOHDBFlu), 1H),
d/ppm 5.8 to 6.5 (br, Cp, 4H),
d/ppm 6.7 to 7.5 (br, Ar(OMOHDBFlu) & Ar(p-tol), 10H), and
d/ppm 7.29 (s, Ar(OMOHDBFlu), 2H).
FD-MS spectrum : M/z 644($M^+$)

(ii) Synthesis of di(p-tolyl)methylene ($\eta^5$-cyclopentadienyl) ($\eta^5$-octamethyloctahydrodibenzofluorenyl)zirconium dichloride

Into a 100 ml of Kildall flask equipped with a dripping funnel and a magnetic stirrer, which had been sufficiently purged with nitrogen, 1.10 g (1.56 mmol) of cyclopentadienyl(octamethyloctahydrodibenzofluorenyl)di-p-tolylmethane and 30 mL of dehydrated diethylether were added to obtain a clear solution. While cooling the flask in an iced water bath, 2.1 mL (3.30 mmol) of n-butyllithium/hexane solution (1.56 mol/L) was gradually added to the clear solution in the flask. Next, the solution in the flask was stirred for 20 hours at room temperature under a nitrogen atmosphere to obtain a slurry of red solid and red solution. While cooling the flask in a methanol/dry-ice bath, 0.552 g (1.46 mmol) of the complex of zirconium tetrachloride and tetrahydrofuran (zirconium tetrachloride:tetrahydrofuran = 1:2) was added to the solution in the flask. Next, the temperature of the solution was gradually elevated to room temperature and the solution was stirred for 24 hours at room temperature under a nitrogen atmosphere to obtain a slurry of peach red solid and red solution. The solvent was distilled off under reduced pressure, and thus-obtained red solid was washed with hexane. Subsequently, dichloromethane was added to the solid to extract the red solution. The solvent of the obtained red solution was distilled off under reduced pressure to obtain a peach red solid, di(p-tolyl)methylene($\eta^5$-cyclopentadienyl) ($\eta^5$-octamethyloctahydrodibenzofluorenyl)zirconium dichloride. The yield of the peach red solid was 0.825 g (1.02 mmol, the yield constant of 70.2%). The identification of di(p-tolyl)methylene($\eta^5$-cyclopentadienyl)($\eta^5$-octamethyloctahydrodibenzofluorenyl)zirconium dichloride was carried out through $^1$H-NMR spectra and FD-MS spectra and the results of the measurement are as follows.

$^1$H-NMR spectrum (270 MHz, $CDCl_3$):

d/ppm 0.82 (s, Me(OMOHDBFlu), 6H),
d/ppm 0.93 (s, Me(OMOHDBFlu), 6H),
d/ppm 1.40 (s, Me(OMOHDBFlu), 6H),
d/ppm 1.46 (s, Me(OMOHDBFlu), 6H),
d/ppm 1.5 to 1.7 (m, $CH_2$(OMOHDBFlu), 8H)
d/ppm 2.32 (s, Me, 6H),
d/ppm 5.53 (t, J=2.6 Hz, Cp, 2H),
d/ppm 6.17 (s, Ar(OMOHDBFlu), 2H),
d/ppm 6.25 (t, J=2.6 Hz, Cp, 2H),
d/ppm 7.1 to 7.3 (m, Ar(p-tol), 4H),
d/ppm 7.6 to 7.8 (m, Ar(p-tol), 4H), and
d/ppm 8.03 (s, Ar(Flu), 2H)
FD-MS spectrum : M/z 804($M^+$)

[Example 1]

Preparation of catalyst solution

Into a glass flask which had been sufficiently purged with nitrogen, 0.0005 mmol of di(p-tolyl)methylene(cyclopentadienyl)(octamethyloctahydrodibenzof luorenyl)zirconium dichloride was charged, and a solution of MMAO from Tosoh Finechem Corp. in hexane (0.125 mmol in terms of A1) was added thereto to obtain a catalyst solution.

Polymerization

In a stainless steel autoclave having an inner volume of 2 liters, which had been thoroughly purged with nitrogen, 800 milliliters of dehydrated hexane and 200 milliliters of dehydrated 1-octene were introduced, the temperature inside of the system was elevated to 145˚C, and 1500 milliliters of hydrogen was introduced and ethylene was fed until the total pressure became 3 MPa-G. Subsequently, 1.0 mmol of triisobutylaluminum, and the above-prepared catalyst solution were forced into the autoclave with nitrogen, and the stirring rotation speed was set at 400 rpm to initiate polymerization. Thereafter, only ethylene was continuously fed to maintain the total pressure at 3 MPa-G, and polymerization was performed at 150˚C for 30 minutes. After a small amount of ethanol was added to the system to terminate the polymerization, the unreacted ethylene was purged away. The resulting polymer solution was poured into an excessive amount of methanol to precipitate a polymer. The polymer was recovered by filtration, and dried overnight at 135˚C under reduced pressure. As a result, 79.6 g of ethylene/1-octene copolymer was obtained.

For the preparation of the measurement sample, to the obtained ethylene polymer, 0.1% by weight of Irganox 1076 manufactured by Ciba Specialty Chemicals and 0.1% by weight of Irgafos 168 manufactured by Ciba Specialty Chemicals were added as heat-resistant stabilizers, and kneaded using a Laboplasto Mill manufactured by Toyo Seiki

Seisakusho K. K. at a resin temperature of 180˚C, and a rotation speed of 50 rpm. Then, the mixture was melt kneaded for 5 minutes. Further, this molten polymer was cooled using a press molding machine manufactured by Shinto Metal Industries, Ltd. under the conditions of a cooling temperature of 20˚C, a cooling time of 5 minutes, and a cooling pressure of 100 kg/cm$^2$. The sample was used to measure its physical properties, and the results thereof are shown in Tables 3 and 4.

[Example 2]

Preparation of catalyst solution

Into a glass flask which had been sufficiently purged with nitrogen, 0.00025 mmol of di(p-tolyl)methylene (cyclopentadienyl)(octamethyloctahydrodibenzof luorenyl)zirconium dichloride was charged, and a solution of TMAO-341 from Tosoh Finechem Corp. in hexane (0.0625 mmol in terms of Al) was added thereto to obtain a catalyst solution.

Polymerization

In a stainless steel autoclave having an inner volume of 2 liters, which had been thoroughly purged with nitrogen, 800 milliliters of dehydrated hexane and 200 milliliters of dehydrated 1-octene were introduced, the temperature inside of the system was elevated to 145˚C, and 1,500 milliliters of hydrogen was introduced and ethylene was fed until the total pressure became 3 MPa-G. Subsequently, 1.0 mmol of triisobutylaluminum, and the above-prepared catalyst solution were forced into the autoclave with nitrogen, and the stirring rotation speed was set at 400 rpm to initiate polymerization. Thereafter, only ethylene was continuously fed to maintain the total pressure at 3 MPa-G, and polymerization was performed at 150˚C for 10 minutes. After a small amount of ethanol was added to the system to terminate the polymerization, the unreacted ethylene was purged away. The resulting polymer solution was poured into an excessive amount of methanol to precipitate a polymer. The polymer was recovered by filtration, and dried overnight at 135˚C under reduced pressure. As a result, 80.3 g of ethylene/1-octene copolymer was obtained. The obtained ethylene polymer was used to prepare a measurement sample in the same manner as in Example 1. The sample was used to measure its physical properties, and the results thereof are shown in Tables 3 and 4.

[Example 3]

Preparation of catalyst solution

Into a glass flask which had been sufficiently purged with nitrogen, 0.00025 mmol of di(p-tolyl)methylene (cyclopentadienyl)(octamethyloctahydrodibenzof luorenyl)zirconium dichloride was charged, and a solution of TMAO-341 from Tosoh Finechem Corp. in hexane (0.0625 mmol in terms of Al) was added thereto to obtain a catalyst solution.

Polymerization

In a stainless steel autoclave having an inner volume of 2 liters, which had been thoroughly purged with nitrogen, 700 milliliters of dehydrated hexane and 350 milliliters of dehydrated 1-octene were introduced, the temperature inside of the system was elevated to 145˚C, and 1,200 milliliters of hydrogen was introduced and ethylene was fed until the total pressure became 3 MPa-G. Subsequently, 1.0 mmol of triisobutylaluminum, and the above-prepared catalyst solution were forced into the autoclave with nitrogen, and the stirring rotation speed was set at 400 rpm to initiate polymerization. Thereafter, only ethylene was continuously fed to maintain the total pressure at 3 MPa-G, and polymerization was performed at 150˚C for 30 minutes. After a small amount of ethanol was added to the system to terminate the polymerization, the unreacted ethylene was purged away. The resulting polymer solution was poured into an excessive amount of methanol to precipitate a polymer. The polymer was recovered by filtration, and dried overnight at 135˚C under reduced pressure. As a result, 143.7 g of ethylene/1-octene copolymer was obtained. The obtained ethylene polymer was used to prepare a measurement sample in the same manner as in Example 1. The sample was used to measure its physical properties, and the results thereof are shown in Tables 3 and 4.

[Example 4]

Polymerization

In a stainless steel autoclave having an inner volume of 2 liters, which had been thoroughly purged with nitrogen, 800 milliliters of dehydrated hexane and 200 milliliters of dehydrated 1-octene were introduced, the temperature inside

of the system was' elevated to 145˚C, and 500 milliliters of hydrogen was introduced and ethylene was fed until the total pressure became 3 MPa-G. Subsequently, 0.3 mmol of triisobutylaluminum, 0.001 mmol of di(p-tolyl)methylene (cyclopentadienyl)(octamethyloctahydrodibenzofluorenyl)zircon ium dichloride, and 0.01 mmol of N,N-dimethylanilinium tetrakis(pentafluorophenyl)borate were forced into the autoclave with nitrogen, and the stirring rotation speed was set at 400 rpm to initiate polymerization. Thereafter, only ethylene was continuously fed to maintain the total pressure at 3 MPa-G, and polymerization was performed at 150˚C for 30 minutes. After a small amount of ethanol was added to the system to terminate the polymerization, the unreacted ethylene was purged away. The resulting polymer solution was poured into an excessive amount of methanol to precipitate a polymer. The polymer was recovered by filtration, and dried overnight at 135˚C under reduced pressure. As a result, 59.7 g of ethylene/1-octene copolymer was obtained. The obtained ethylene polymer was used to prepare a measurement sample in the same manner as in Example 1. The sample was used to measure its physical properties, and the results thereof are shown in Tables 3 and 4.

[Example 5]

Polymerization

Into a complete stir-mixing type sequential polymerization vessel having an inner volume of 1 liter, dehydrated n-hexane at 6.0 L/hr, di(p-tolyl)methylene(cyclopentadienyl) (octamethyloctahydrodibenzofluorenyl) zirconium dichloride as a hexane solution (0.16 mmol/L) which is prepared by dissolving in n-hexane at 0.0238mmol/hr, methylaluminoxane (TMAO-341 from Tosoh Finechem Corp.) as a toluene solution (80 mmol/L) at 11.9 mmol/hr in terms of Al, and triisobutylaluminium as a hexane solution (12 mmol/L) at 1.8mmol/hr were introduced. At the same time, ethylene, hydrogen, and dehydrated 1-octene were subsequently fed in the polymerization vessel at 680 g/hr, 0.0504 g/hr, and 0.40 kg/hr, respectively, a polymerization solution was continuosly extracted from the top of the polymerization vessel until the reaction pressure inside the polymerization vessel is 6.9 MPa-G, and a polymerization reaction was carried out at 175 ˚C. To the polymerization solution, which was continosly extracted from the polymerization vessel, a small amount of isopropyl alcohol was added as a deactivation agent, and 0.05% by weight of Irganox 1076 (manufactured by Ciba Specialty Chemicals) was added as a heat-resistant stabilizer. Thereafter, the polymerization solution was flashed off till the pressure reach to an atmosphere pressure to precipitate a polymer. Next, the resulting polymer was dried in a vacuum drier at 120˚C for 8 hours under a nitrogen gas flow. The ethylene inversion rate in this polymerization was 89.4%, and the yield of the ethylene polymer was 0.658 kg/hr (refer to Table 1). The sample was used to measure its physical properties, and the results thereof are shown in Tables 3 and 4.

[Examples 6 to 17]

Polymerization

According to the Example 5, the ethylene polymer was obtained in the same manner as in Example 5 except to change the polymerization conditions such as each catalyst component, the amount of hydrogen and 1-octene, and the reaction temperature, as represented in Table 1. The sample was used to measure its physical properties, and the results thereof are shown in Tables 3 and 4.

[Example 18]

Polymerization

Into a complete stir-mixing type polymerization vessel having an inner volume of 1 liter, dehydrated n-hexane at 1.0 L/hr, di(p-tolyl)methylene(cyclopentadienyl) (octamethyloctahydrodibenzofluorenyl) zirconium dichloride as a n-hexane solution at 0.53 μmmol/hr, methylaluminoxane (TMAO-341 from Tosoh Finechem Corp.) as a n-hexane solution at 0.267 mmol/hr in terms of Al, triisobutylaluminium as a hexane solution at 2.0 mmol/hr, ethylene at 94 g/hr, dehydrated 1-octene at 379 g/hr, and hydrogen at 0.2 NL/hr were continuously introduced. And a polymerization solution was continuosly extracted from the polymerization vessel keeping the total pressure inside the polymerization vessel to 3.8 MPa-G, and then the polymerization was carried out at 150˚C for 0.5 hours as a retention time. To the polymerization solution, which was continosly extracted from the polymerization vessel, a small amount of methanol was added as a deactivation agent. Thereafter, the polymerization solution was transferred to a polymerization solution recovery drum and then the unreacted ethylene was purged away. Next, the polymerization solution was poured into methanol to precipitate a polymer. The resulting polymer was added with 0.05% by weight of Irganox 1076 (manufactured by Ciba Specialty Chemicals) as a heat-resistant stabilizer and then was dried in a vacuum drier at 200˚C for 0.5 hours under a ventilation of nitrogen gas to obtain 79 g/hr of ethylene/1-octene copolymer (refer to Table 2). The sample was used

to measure its physical properties, and the results thereof are shown in Tables 3 and 4.

[Examples 19 to 23]

Polymerization

According to the Example 18, the ethylene/1-octene copolymer was obtained in the same manner as in Example 18 except to change the polymerization conditions as represented in Table 2. The sample was used to measure its physical properties, and the results thereof are shown in Tables 3 and 4.

[Example 24]

Preparation of catalyst solution

Into a glass flask which had been sufficiently purged with nitrogen, 0.00025 mmol of di(p-tolyl)methylene (cyclopentadienyl)(octamethyloctahydrodibenzof luorenyl)zirconium dichloride was charged, and a solution of TMAO-341 from Tosoh Finechem Corp. in hexane (0.125 mmol in terms of Al) was added thereto to obtain a catalyst solution.

Polymerization

In a stainless steel autoclave having an inner volume of 2 liters, which had been thoroughly purged with nitrogen, 350 milliliters of heptane and 650 milliliters of 4-methyl-1-pentene were introduced, the temperature inside of the system was elevated to 145˚C, and 500 milliliters of hydrogen was introduced and ethylene was fed until the total pressure is 3 MPa-G. Subsequently, 0.5 mmol of triisobutylaluminum, and the above-prepared catalyst solution were forced into the autoclave with nitrogen, and the stirring rotation speed was set at 400 rpm to initiate polymerization. Thereafter, only ethylene was continuously fed to maintain the total pressure of 3 MPa-G, and polymerization was performed at 150˚C for 30 minutes. After a small amount of ethanol was added to the system to terminate the polymerization, the unreacted ethylene was purged away. The resulting polymer solution was poured into an excessive amount of methanol to precipitate a polymer. The polymer was recovered by filtration, and dried overnight at 135˚C under reduced pressure. As a result, 99.2 g of ethylene/4-methyl-1-pentene copolymer was obtained. The obtained ethylene polymer was used to prepare a measurement sample in the same manner as in Example 1. The sample was used to measure its physical properties, and the results thereof are shown in Tables 3 and 4.

[Comparative Example 1]

A pellet of an ethylene/1-hexene copolymer (Product name: EXACT 3031) which is commercially available from Exxon Chemical Company was used as a measurement sample to measure its physical properties. The results thereof are shown in Tables 3 and 4.

[Comparative Example 2]

A pellet of an ethylene/1-hexene copolymer (Product name: EXACT 3030) which is commercially available from Exxon Chemical Company was used as a measurement sample to measure its physical properties. The results thereof are shown in Tables 3 and 4.

[Comparative Example 3]

A pellet of an ethylene/1-octene copolymer (Product name: Affinity FW1650) which is commercially available from Dow Chemical Company was used as a measurement sample to measure its physical properties. The results thereof are shown in Tables 3 and 4.

In Comparative Examples 1 to 3, the polymer did not satisfy the requirements for $Log_{10}$(H/W) as described in Claim 1. For this reason, as compared with Example 1, it was assumed that the composition distribution was wide, and the anti-blocking property was deteriorated.

[Table 1]

| Examples | | | 5 | 6 | 7 | 8 | 9 | 10 | 11 | 12 | 13 | 14 | 15 | 16 | 17 |
|---|---|---|---|---|---|---|---|---|---|---|---|---|---|---|---|
| Polymeri-zation conditions | Metallocene Complex(1*) | [mmol/hr] | 0.0238 | 0.0238 | 0.0119 | 0.0190 | 0.0190 | 0.0190 | 0.0190 | 0.0190 | 0.0238 | 0.0238 | 0.0190 | 0.0190 | 0.0190 |
| | Methylaluminoxane(2*) | [mmol/hr] | 11.9 | 5.9 | 5.9 | 19.0 | 19.0 | 19.0 | 19.0 | 19.0 | 11.9 | 11.9 | 9.5 | 9.5 | 9.5 |
| | Triisobutylaluminium | [mmol/hr] | 1.8 | 1.8 | 1.8 | 1.8 | 1.8 | 0.0 | 1.8 | 1.8 | 1.8 | 1.8 | 1.8 | 1.8 | 0.0 |
| | Hydrogen | [g/hr] | 0.0504 | 0.0517 | 0.0491 | 0.032 | 0.0329 | 0.0354 | 0.0291 | 0.0088 | 0.0324 | 0.0343 | 0.0078 | 0.0077 | 0.0077 |
| | 1-octene | [kg/hr] | 0.40 | 0.41 | 0.39 | 0.39 | 0.43 | 0.38 | 0.68 | 0.54 | 0.29 | 0.31 | 0.40 | 0.40 | 0.40 |
| | Polymeri-zation Temperature | [°C] | 175 | 175 | 176 | 175 | 184 | 175 | 170 | 171 | 160 | 160 | 160 | 150 | 160 |
| Conversion of Ethylene | | [%] | 89.4 | 82.8 | 80.3 | 91.1 | 84.4 | 93.6 | 94.1 | 93.4 | 99.6 | 99.4 | 97.2 | 98.2 | 94.0 |
| Yield of Ethylene Polymer | | [kg/hr] | 0.658 | 0.598 | 0.578 | 0.687 | 0.613 | 0.703 | 0.814 | 0.766 | 0.882 | 0.849 | 0.852 | 0.891 | 0.842 |

1*: di(p-tolyl)methylene($\eta^5$-cyclopentadienyl)($\eta^5$-octamethyloctahydrodibenzofluorenyl)zirconium dichloride
2*: TMAO-341 manufactured by Tosoh Finechem Corp.

[Table 2]

| Examples | | | 18 | 19 | 20 | 21 | 22 | 23 |
|---|---|---|---|---|---|---|---|---|
| Polymerization conditions | Metallocene Complex (1*) | [μmol/hr] | 0.53 | 0.34 | 0.43 | 0.40 | 0.86 | 0.35 |
| | Methylaluminoxane (2*) | [mmol/hr] | 0.267 | 0.171 | 0.214 | 0.200 | 0.428 | 0.175 |
| | Triisobutylaluminium | [mmol/hr] | 2.0 | 2.0 | 2.0 | 2.0 | 2.0 | 2.0 |
| | Ethylene | [g/hr] | 94 | 94 | 94 | 94 | 88 | 88 |
| | Hydrogen | [NL/hr] | 0.20 | 0.30 | 0.20 | 0.00 | 0.00 | 0.15 |
| | 1-octene | [g/hr] | 379 | 422 | 422 | 529 | 454 | 315 |
| | Polymerization Temperature | [°C] | 150 | 150 | 150 | 150 | 180 | 150 |
| | Polymerization Pressure | [MPa-G] | 3.8 | 3.8 | 3.8 | 3.8 | 3.8 | 3.8 |
| | Retention Time | [hr] | 0.5 | 0.5 | 0.5 | 0.5 | 0.5 | 0.5 |
| Conversion of Ethylene | | [wt%] | 53.7 | 57.2 | 60.6 | 47.3 | 51.0 | 24.6 |
| Yield of Ethylene Polymer | | [q/hr] | 79 | 88 | 94 | 71 | 72 | 29 |
| 1*: di(p-tolyl)methylene($\eta^5$-cyclopentadienyl)($\eta^5$-octamethyloctahydrodibenzofluorenyl)zirconium dichloride<br>2*: TMAO-341 manufactured by Tosoh Finechem Corp. | | | | | | | | |

[Table 3]

| | α-olefin | α-olefin content mol% | Density (D) kg/m$^3$ | MFR g/10 min | [η] dl/g | Log[η] | *3 | *4 | Tm ˚C | MT g | Amount of decane-soluble fraction wt% | Mn | Mw | Mz | Mw/Mn | Mz/Mw |
|---|---|---|---|---|---|---|---|---|---|---|---|---|---|---|---|---|
| Example 1 | 1-octene | 4.1 | 905 | 1.66 | 1.69 | 0.228 | 0.264 | 0.114 | 101.0 | 1.33 | 0.25 | 37800 | 67000 | 108000 | 1.78 | 1.61 |
| Example 2 | 1-octene | 4.5 | 905 | 4.31 | 1.38 | 0.140 | 0.177 | 0.027 | 100.4 | 0.43 | 0.70 | 29200 | 53700 | 87800 | 1.84 | 1.63 |
| Example 3 | 1-octene | 6.7 | 894 | 4.60 | 1.33 | 0.124 | 0.171 | 0.021 | 88.2 | 0.33 | 1.21 | 36200 | 67000 | 110000 | 1.85 | 1.64 |
| Example 4 | 1-octene | 5.5 | 898 | 1.03 | 1.68 | 0.225 | 0.307 | 0.157 | 93.2 | 2.7 | 0.93 | 39900 | 73900 | 126000 | 1.85 | 1.7 |
| Example 5 | 1-octene | 3.3 | 918 | 5.00 | 1.28 | 0.107 | 0.163 | 0.013 | 111.2 | 0.74 | | 26100 | 51400 | 87700 | 1.97 | 1.71 |
| Example 6 | 1-octene | 2.9 | 918 | 2.01 | 1.51 | 0.179 | 0.246 | 0.096 | 112.6 | 1.77 | | 32700 | 65200 | 115000 | 1.99 | 1.76 |
| Example 7 | 1-octene | 2.8 | 918 | 1.89 | 1.55 | 0.190 | 0.252 | 0.102 | 113.3 | 1.99 | | 33100 | 65700 | 113000 | 1.98 | 1.73 |
| Example 8 | 1-octene | 4.0 | 915 | 4.90 | 1.25 | 0.097 | 0.165 | 0.015 | 108.9 | 0.68 | | 24100 | 48100 | 82900 | 1.99 | 1.72 |
| Example 9 | 1-octene | 3.4 | 919 | 3.90 | 1.28 | 0.107 | 0.186 | 0.036 | 111.4 | 0.81 | | 26100 | 52100 | 89000 | 2.00 | 1.71 |
| Example 10 | 1-octene | 4.1 | 913 | 3.40 | 1.24 | 0.093 | 0.198 | 0.048 | 106.1 | 1.04 | | 27100 | 55000 | 100000 | 2.03 | 1.83 |
| Example 11 | 1-octene | 7.6 | 898 | 11.6 | 1.07 | 0.029 | 0.086 | -0.064 | 91.0 | 0.21 | | 22200 | 43900 | 73900 | 1.98 | 1.67 |
| Example 12 | 1-octene | 6.6 | 902 | 9.00 | 1.10 | 0.041 | 0.110 | -0.040 | 95.7 | 0.32 | | 24500 | 47800 | 76500 | 1.87 | 1.67 |
| Example 13 | 1-octene | 6.0 | 905 | 25.5 | 0.91 | -0.041 | 0.015 | -0.135 | 98.2 | *5 | | 18200 | 36500 | 63900 | 2.01 | 1.75 |
| Example 14 | 1-octene | 5.9 | 904 | 15.1 | 1.00 | 0.000 | 0.062 | -0.088 | 98.3 | 0.15 | | 19900 | 40300 | 71300 | 2.03 | 1.77 |
| Example 15 | 1-octene | 6.6 | 900 | 8.40 | 1.13 | 0.053 | 0.116 | -0.034 | 95.1 | 0.33 | | 23200 | 46600 | 81900 | 2.01 | 1.76 |
| Example 16 | 1-octene | 8.1 | 893 | 14.7 | 0.99 | -0.004 | 0.065 | -0.085 | 86.8 | 0.19 | | 22000 | 43400 | 78000 | 1.97 | 1.80 |
| Example 17 | 1-octene | 7.2 | 897 | 2.81 | 1.41 | 0.149 | 0.216 | 0.066 | 90.8 | 1.26 | | 28500 | 58600 | 107000 | 2.05 | 1.82 |
| Example 18 | 1-octene | 12.5 | 878 | 1.22 | 1.82 | 0.260 | 0.292 | 0.142 | 64.6 | 1.65 | | 44500 | 89500 | 159000 | 2.01 | 1.78 |
| Example 19 | 1-octene | 13.7 | 875 | 19.8 | 1.02 | 0.009 | 0.038 | -0.112 | 63.3 | *5 | | 24700 | 44100 | 69400 | 1.79 | 1.58 |
| Example 20 | 1-octene | 14.2 | 872 | 5.33 | 1.34 | 0.127 | 0.157 | 0.007 | 61.0 | *5 | | 33000 | 62600 | 105000 | 1.90 | 1.69 |
| Example 21 | 1-octene | 13.0 | 876 | 0.73 | 1.98 | 0.297 | 0.339 | 0.189 | 62.5 | 3.09 | | 53100 | 108000 | 195000 | 2.03 | 1.81 |
| Example 22 | 1-octene | 13.4 | 877 | 7.62 | 1.24 | 0.093 | 0.125 | -0.025 | 65.1 | 0.3 | | 27600 | 55900 | 101000 | 2.02 | 1.81 |
| Example 23 | 1-octene | 8.0 | 893 | 0.58 | 2.09 | 0.320 | 0.360 | 0.210 | 87.8 | *5 | | 51800 | 104000 | 185000 | 2.01 | 1.77 |

(continued)

| | α-olefin | α-olefin content mol% | Density (D) kg/m$^3$ | MFR g/10 min | [η] dl/g | Log[η] | *3 | *4 | Tm °C | MT g | Amount of decane-soluble fraction wt% | Mn | Mw | Mz | Mw/Mn | Mz/Mw |
|---|---|---|---|---|---|---|---|---|---|---|---|---|---|---|---|---|
| Example 24 | 4-methyl-1-pentene | 7.6 | 886 | 2.40 | 1.54 | 0.188 | 0.230 | 0.080 | 78.2 | 0.91 | | 35200 | 65500 | 110000 | 1.86 | 1.68 |
| Comparative Example 1 | 1-hexene | 6.1 | 901 | 3.30 | 1.51 | 0.179 | 0.201 | 0.051 | 96.7 | 0.46 | 1.12 | 29300 | 60100 | 96500 | 2.05 | 1.61 |
| Comparative Example 2 | 1-hexene | 4.7 | 905 | 2.11 | 1.66 | 0.220 | 0.242 | 0.092 | 100.9 | 0.66 | 1.08 | 34600 | 67400 | 107000 | 1.95 | 1.59 |
| Comparative Example 3 | 1-octene | 4.9 | 901 | 3.20 | 1.32 | 0.121 | 0.204 | 0.054 | 98.2 | 0.88 | 1.08 | 53500 | 53500 | 95800 | 2.12 | 1.79 |

*3: $-0.21 \times Log_{10}MFR + 0.31$
*4: $-0.21 \times Log_{10}MFR + 0.16$
*5: inestimable

[Table 4]

| | Elution amount (integrated value) wt% | | | | | | | | | | | | | | | Peak Temp. °C | H/W | $Log_{10}$ (H/W) | *6 | *7 |
|---|---|---|---|---|---|---|---|---|---|---|---|---|---|---|---|---|---|---|---|---|
| | 0°C | 10°C | 20°C | 30°C | 40°C | 50°C | 60°C | 70°C | 80°C | 90°C | 100°C | 110°C | 120°C | 130°C | 140°C | | | | | |
| Example 1 | 0.0 | 0.0 | 0.0 | 0.0 | 0.0 | 0.0 | 2.8 | 56.6 | 97.2 | 99.9 | 100.0 | 100.0 | 100.0 | 100.0 | 100.0 | 69 | 11.7 | 1.067 | 1.452 | 0.731 |
| Example 2 | 0.0 | 0.0 | 0.0 | 0.0 | 0.1 | 0.7 | 13.2 | 81.8 | 97.6 | 99.8 | 100.0 | 100.0 | 100.0 | 100.0 | 100.0 | 68 | 9.25 | 0.966 | 1.452 | 0.731 |
| Example 3 | 0.0 | 0.1 | 0.2 | 0.8 | 4.1 | 26.3 | 86.4 | 97.4 | 99.8 | 100.0 | 100.0 | 100.0 | 100.0 | 100.0 | 100.0 | 54 | 5.74 | 0.759 | 1.272 | 0.552 |
| Example 4 | 0.0 | 0.0 | 0.0 | 0.1 | 0.2 | 5.8 | 53.4 | 93.8 | 98.3 | 99.9 | 100.0 | 100.0 | 100.0 | 100.0 | 100.0 | 60 | 7.74 | 0.889 | 1.337 | 0.617 |
| Example 5 | 0.0 | 0.0 | 0.0 | 0.0 | 0.1 | 0.5 | 2.7 | 15.6 | 94.1 | 100.0 | 100.0 | 100.0 | 100.0 | 100.0 | 100.0 | 77 | 15.4 | 1.188 | 1.663 | 0.943 |
| Example 6 | 0.0 | 0.0 | 0.0 | 0.0 | 0.0 | 0.2 | 0.9 | 7.0 | 71.6 | 100.0 | 100.0 | 100.0 | 100.0 | 100.0 | 100.0 | 80 | 18.7 | 1.273 | 1.663 | 0.943 |
| Example 7 | 0.0 | 0.0 | 0.0 | 0.0 | 0.0 | 0.2 | 0.5 | 4.9 | 52.8 | 100.0 | 100.0 | 100.0 | 100.0 | 100.0 | 100.0 | 80 | 27.2 | 1.434 | 1.653 | 0.943 |
| Example 8 | 0.0 | 0.0 | 0.0 | 0.2 | 0.6 | 2.1 | 9.0 | 49.1 | 99.3 | 100.0 | 100.0 | 100.0 | 100.0 | 100.0 | 100.0 | 71 | 9.20 | 0.964 | 1.615 | 0.894 |
| Example 9 | 0.0 | 0.0 | 0.0 | 0.1 | 0.2 | 0.6 | 2.5 | 13.6 | 91.0 | 100.0 | 100.0 | 100.0 | 100.0 | 100.0 | 100.0 | 77 | 16.9 | 1.228 | 1.680 | 0.960 |
| Example 10 | 0.0 | 0.0 | 0.0 | 0.2 | 0.5 | 2.1 | 9.0 | 52.3 | 99.2 | 100.0 | 100.0 | 100.0 | 100.0 | 100.0 | 100.0 | 71 | 10.1 | 1.003 | 1.582 | 0.862 |
| Example 11 | 0.6 | 0.8 | 1.9 | 5.2 | 16.1 | 45.7 | 92.4 | 99.0 | 99.8 | 100.0 | 100.0 | 100.0 | 100.0 | 100.0 | 100.0 | 54 | 3.76 | 0.575 | 1.237 | 0.537 |
| Example 12 | 0.3 | 0.4 | 0.8 | 2.2 | 7.0 | 22.5 | 72.0 | 98.4 | 99.8 | 100.0 | 100.0 | 100.0 | 100.0 | 100.0 | 100.0 | 59 | 5.44 | 0.736 | 1.403 | 0.683 |
| Example 13 | 0.4 | 0.7 | 1.2 | 2.7 | 7.4 | 20.3 | 59.3 | 98.1 | 99.6 | 100.0 | 100.0 | 100.0 | 100.0 | 100.0 | 100.0 | 61 | 4.76 | 0.678 | 1.352 | 0.651 |
| Example 14 | 0.3 | 0.5 | 0.9 | 2.1 | 6.2 | 17.8 | 57.6 | 97.6 | 99.5 | 100.0 | 100.0 | 100.0 | 100.0 | 100.0 | 100.0 | 61 | 5.37 | 0.730 | 1.335 | 0.635 |
| Example 15 | 0.4 | 0.5 | 1.0 | 2.7 | 8.4 | 25.0 | 78.0 | 99.1 | 99.9 | 100.0 | 100.0 | 100.0 | 100.0 | 100.0 | 100.0 | 58 | 5.71 | 0.757 | 1.370 | 0.650 |
| Example 16 | 0.8 | 1.1 | 2.5 | 7.1 | 21.6 | 59.0 | 96.4 | 99.1 | 99.7 | 100.0 | 100.0 | 100.0 | 100.0 | 100.0 | 100.0 | 52 | 3.27 | 0.514 | 1.156 | 0.456 |
| Example 17 | 0.3 | 0.4 | 0.9 | 2.8 | 9.3 | 31.3 | 89.7 | 98.9 | 99.8 | 100.0 | 100.0 | 100.0 | 100.0 | 100.0 | 100.0 | 55 | 5.51 | 0.813 | 1.321 | 0.601 |
| Example 18 | 2.0 | 4.5 | 10.5 | 30.8 | 81.7 | 99.2 | 99.9 | 100.0 | 100.0 | 100.0 | 100.0 | 100.0 | 100.0 | 100.0 | 100.0 | 36 | 3.33 | 0.523 | 1.011 | 0.2914 |
| Example 19 | 8.8 | 13.5 | 28.0 | 52.8 | 94.6 | 99.6 | 100.0 | 100.0 | 100.0 | 100.0 | 100.0 | 100.0 | 100.0 | 100.0 | 100.0 | 30 | 1.83 | 0.262 | 0.862 | 0.163 |
| Example 20 | 7.6 | 12.2 | 27.3 | 55.9 | 96.8 | 99.7 | 100.0 | 100.0 | 100.0 | 100.0 | 100.0 | 100.0 | 100.0 | 100.0 | 100.0 | 29 | 2.17 | 0.336 | 0.914 | 0.194 |
| Example 21 | 3.2 | 6.0 | 14.2 | 39.5 | 81.2 | 98.9 | 99.9 | 100.0 | 100.0 | 100.0 | 100.0 | 100.0 | 100.0 | 100.0 | 100.0 | 36 | 2.01 | 0.303 | 1.069 | 0.2788 |
| Example 22 | 7.1 | 11.5 | 24.5 | 50.3 | 88.2 | 99.1 | 99.9 | 100.0 | 100.0 | 100.0 | 100.0 | 100.0 | 100.0 | 100.0 | 100.0 | 33 | 2.17 | 0.336 | 0.995 | 0.2751 |
| Example 23 | 0.3 | 0.6 | 1.7 | 4.7 | 13.4 | 29.1 | 86.0 | 100.0 | 100.0 | 100.0 | 100.0 | 100.0 | 100.0 | 100.0 | 100.0 | 57 | 8.24 | 0.916 | 1.346 | 0.5559 |
| Example 24 | 0.2 | 0.4 | 1.5 | 6.0 | 27.5 | 88.7 | 99.9 | 100.0 | 100.0 | 100.0 | 100.0 | 100.0 | 100.0 | 100.0 | 100.0 | 46 | 5.89 | 0.770 | 1.142 | 0.4218 |
| Comparative Example 1 | 0.1 | 0.1 | 0.1 | 0.2 | 0.7 | 8.8 | 46.1 | 91.5 | 97.9 | 99.9 | 100.0 | 100.0 | 100.0 | 100.0 | 100.0 | 52 | 3.24 | 0.511 | 1.386 | 0.666 |
| Comparative Example 2 | 0.1 | 0.1 | 0.1 | 0.1 | 0.2 | 0.3 | 13.1 | 71.6 | 97.3 | 99.9 | 100.0 | 100.0 | 100.0 | 100.0 | 100.0 | 68 | 5.18 | 0.714 | 1.452 | 0.731 |
| Comparative Example 3 | 0.1 | 0.1 | 0.1 | 0.3 | 2.4 | 11.2 | 39.7 | 89.6 | 97.7 | 99.8 | 100.0 | 100.0 | 100.0 | 100.0 | 100.0 | 65 | 3.55 | 0.550 | 1.386 | 0.666 |

*6: For 0.10 ≤ MFR ≤ 1.00, 0.0163 × D - 13.21
For 1.00 < MFR ≤ 10.0, 0.0163 × D - 13.30
For 10.0 < MFR ≤ 100, 0.0163 × D - 13.40
*7: For 0.10 ≤ MFR ≤ 1.00, 0.0163 × D - 14.00
For 1.00 < MFR ≤ 10.0, 0.0163 × D - 14.02
For 10.0 < MFR ≤ 100, 0.0163 × D - 14.10

Industrial Applicability

The ethylene polymer of the present invention satisfying a specific MFR range, a specific density range, a specific range of molecular weight distribution, and a specific relationship between the H/W defined by a temperature rising elution fractionation (TREF) and the density, preferably a specific relationship between the [η] and the MFR, is excellent in the anti-blocking property, and the low-temperature heat sealing property, and also provides a molded product excellent in the mechanical strength. The ethylene polymer and the resin composition comprising the ethylene polymer of the present invention are suitably used for various applications such as extrusion molded products such as a film, a sheet, an infusion bottle, an electric wire covering, a cross-linked cable, a cross-linked pipe, a hollow container, a tube, various pipes, a pulling cap, and general merchandise goods, a fiber, large-scale products by spinning molding, and the like.

## Claims

1. An ethylene polymer, which is a copolymer of ethylene and an α-olefin having 4 to 10 carbon atoms, and satisfies the following conditions [1] to [4] simultaneously:

[1] a melt flow rate (MFR) at 190°C under a load of 2.16 kg is in the range of 0.10 to 100 g/10 min,
[2] a density (D) is in the range of 860 to 930 kg/$m^3$,
[3] a ratio (Mw/Mn) of the weight average molecular weight to the number average molecular weight, as determined by GPC, is in the range of 1.50 or more and 3.00 or less, and
[4] it satisfies the following relationship, in accordance with the MFR value of the condition [1], between the ratio (H/W) of the height (H) of a peak having a highest peak intensity to the width (W) at a half of the height of the peak having the highest peak intensity for an elution curve obtained by a temperature rising elution fractionation (TREF), and the density (D):
for 0.10 ≤ MFR ≤ 1.00:

$$0.0163 \times D - 14.00 \leq Log_{10}(H/W) \leq 0.0163 \times D - 13.21$$

(Eq-1);

for 1.00 < MFR ≤ 10.0:

$$0.0163 \times D - 14.02 \leq Log_{10}(H/W) \leq 0.0163 \times D - 13.30$$

(Eq-2); and

for 10.0 < MFR ≤ 100:

$$0.0163 \times D - 14.10 \leq Log_{10}(H/W) \leq 0.0163 \times D - 13.40$$

(Eq-3).

**2.** The ethylene polymer according to claim 1, further satisfying the following condition [5]:

[5] it satisfies the following relationship between the intrinsic viscosity [η] (g/dl) as measured in decalin at 135°C, and the melt flow rate (MFR) at 190°C under a load of 2.16 kg:

$$-0.21 \times Log_{10}MFR + 0.16 \leq Log_{10}[\eta] \leq -0.21 \times Log_{10}MFR + 0.31$$

(Eq-4).

**3.** A thermoplastic resin composition comprising the ethylene polymer according to claim 1 or 2.

**4.** A molded product obtained from the ethylene polymer according to claim or 2.

**5.** A molded product obtained from the thermoplastic resin composition according to claim 3.

**6.** The molded product according to claim 4 or 5, which is a film.

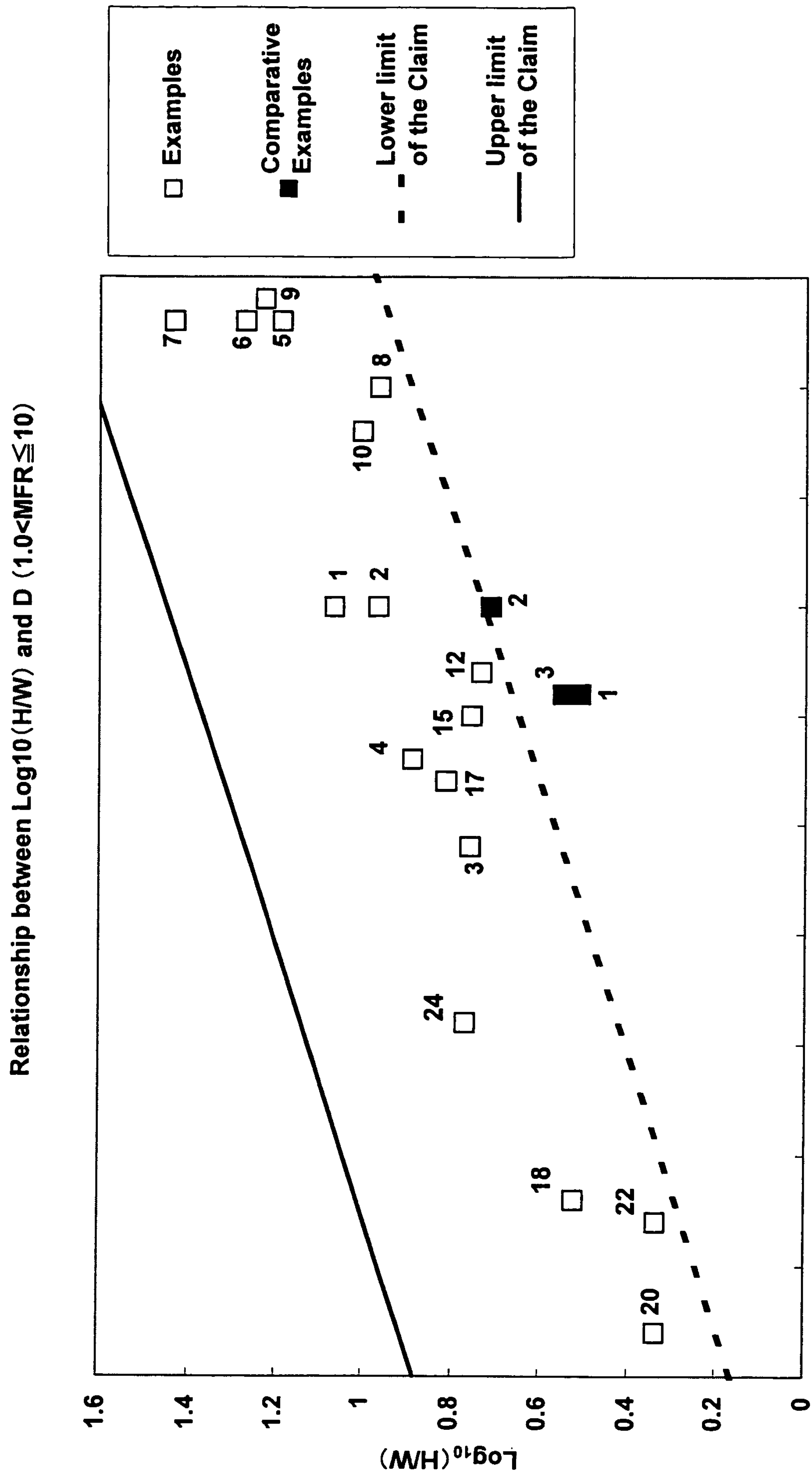

Relationship between Log10(H/W) and D (1.0<MFR≦10)
Examples
Comparative Examples
Lower limit of the Claim
Upper limit of the Claim
$Log_{10}$(H/W)
density (D)/kg/m³
1.6
1.4
1.2
1
0.8
0.6
0.4
0.2
0
870
875
880
885
890
895
900
905
910
915
920

**INTERNATIONAL SEARCH REPORT**

International application No. PCT/JP2006/318869

A. CLASSIFICATION OF SUBJECT MATTER
*C08F210/02*(2006.01)i

According to International Patent Classification (IPC) or to both national classification and IPC

B. FIELDS SEARCHED

Minimum documentation searched (classification system followed by classification symbols)
C08F, C08L

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2000-219786 A (Japan Polychem Corp.), 08 August, 2000 (08.08.00), Claims 1 to 2; Par. Nos. [0020], [0034], [0040] to [0041] (Family: none) | 1-6 |
| X | JP 2000-212340 A (Japan Polychem Corp.), 02 August, 2000 (02.08.00), Claims 1 to 2; Par. Nos. [0023], [0025], [0044], [0055], [0064], [0071] to [0072], [0077] (Family: none) | 1-6 |
| X | JP 7-314624 A (Mitsubishi Chemical Corp.), 05 December, 1995 (05.12.95), Claims 1 to 3; Par. Nos. [0036], [0041], [0043], [0045], [0055] (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search: 07 December, 2006 (07.12.06) | Date of mailing of the international search report: 19 December, 2006 (19.12.06) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/318869

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2005-314680 A (Mitsui Chemicals, Inc.), 10 November, 2005 (10.11.05), Claims 1 to 2; Par. Nos. [0062], [0071] to [0150] & WO 2005/100410 A1 | 1-6 |
| E,A | JP 2006-265388 A (Tosoh Corp.), 05 October, 2006 (05.10.06), Par. Nos. [0020], [0067], [0069], [0097] (Family: none) | 1-6 |
| E,A | JP 2006-265386 A (Tosoh Corp.), 05 October, 2006 (05.10.06), Full text (Family: none) | 1-6 |
| A | JP 2004-182715 A (Mitsui Chemicals, Inc.), 02 July, 2004 (02.07.04), Full text & WO 2004/02962 A1 & US 2006/161013 A1 & EP 1548018 A1 | 1-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005097481 A
- JP H09111208 A
- JP H11269324 A
- JP 2002003661 A
- US 4960878 A
- US 5041584 A
- JP 2078687 A
- JP 1501950 A
- JP 1502036 A
- JP 3179005 A
- JP 3179006 A
- JP 3207703 A
- JP 3207704 A
- US 5321106 A
- JP 2004051676 A


### Non-patent literature cited in the description


- *Polymer,* 1990, vol. 31, 1999
- **KAZUO SOGA, KODANSHA.** *CATALYTIC OLEFIN POLYMERIZATION,* 1990, 376
- **WALTER KAMINSKY.** *Makromol. Chem.,* 1992, vol. 193, 606
- **KENZO SHIROYAMA.** *Polymer Chemistry,* 1971, vol. 28 (310), 156-160
- *Tosoh Fine Research and Technique Report,* 2003, vol. 47, 55